# EUROPEAN PATENT APPLICATION

(11) **EP 2 151 957 A1**
(43) Date of publication of application: **10.02.2010**
(21) Application number: 08764382.1
(22) Date of filing: 20.05.2008
(51) Int. Cl.: H04L 12/56, H04Q 7/38

(54) **COMMUNICATION SYSTEM, CONTROL DEVICE, ROUTER USING NETWORK BASE IP MOBILITY PROTOCOL AND COMMUNICATION METHOD THEREOF**

(30) Priority: 28.05.2007 JP 2007140819
(71) Applicant: Sharp Kabushiki Kaisha, Osaka-shi, Osaka 545-8522 (JP)
(72) Inventor: TOYOKAWA, Suguru, Osaka 545-8522 (JP)
(74) Representative: Müller - Hoffmann & Partner
(86) International application number: PCT/JP2008/059222
(87) International publication number: WO 2008/146659

(57) **Abstract**

When a delivery of packets is made between LMA 3 and MN 1, an options header that enables identification of MN 1 is added between the router (MAG) 2, 4, located between LMA 3 and MN 1, and LMA 3 so as to achieve appropriate routing. When MN 1 moved, buffer transfer from previous access MAGa 2 to new access MAGb 4 is performed also by adding an options header to make delivery to MN1. In this way, in network-based IP mobility protocol, when the mobile terminal (MN) or the control apparatus (LMA) serves as a compressor or decompressor to compress packets, fast handover can be realized when the MN moved, whereby it is possible to save the band for the last one hop, which is the narrowest band.

## Description

### Technical Field

The present invention relates to a communication technology using a network-based IP mobility protocol.

### Background Art

In recent years, research and development of mobility support in the IP layer such as Mobile IPv6 (Internet Protocol version6) etc., have been eagerly carried out. Mobile IP is a protocol in the network layer of the third layer of the OSI (Open Systems Interconnection) reference model, established by ISO (International Organization for Standardization), and is a technology for maintaining communications while hiding movement of a client (switching networks/communication media, momentary blackout of communication, and the like) from upper applications.

In TCP/IP (Transmission Control Protocol/Internet Protocol) as a communication protocol generally used in the current Internet, the IP address is an identifier and at the same time indicates the location on the network. Accordingly, when a node that has been connected to a certain network is changed over to another network, the IP address also changes so that it become impossible to maintain sessions.

To deal with this, Mobile IP assigns a unique address to each node so as to replace the IP address that is being actually used within the TCP/IP stack, thereby providing a configuration that make it look as if the node is communicating based on the assigned unique address with the upper layer or a communication partner, no matter where the node is located at any network (see non-patented document 1, for example).

This Mobile IP is made up of a mobile node (Mobile Node, moving terminal, which will be referred to hereinbelow as "MN"), a home agent (Home Agent, which will be referred to hereinbelow as "HA") and a node called a correspondent node (Correspondent Node, which will be referred to hereinbelow as "CN").

The MN has a constantly unvaried address called home address (Home Address, which will be referred to hereinbelow as "HoA"), and the node that manages this address is the HA. The MN acquires an address used for actual communications, called care-of address(Care-of-Address, which will be referred to hereinbelow as "CoA"), in some manner, e.g., through router advertisement (Router Advertisement, which will be referred to hereinbelow as "RA") of stateless address auto configuration or through a DHCP (Dynamic Host Configuration Protocol)v6 of stateful address auto configuration, when the MN has been connected to a network other than the home link, i. e. , the HA' s link. The MN notifies the HA of the CoA acquired herein by a registration request message called Binding Update, which will be referred to hereinbelow as "BU".

As a result of this, when a node(=CN) that wants to communicate with the MN sends a packet to the HoA, the packet initially reaches the HA because the HoA is the address on the link that is controlled by the HA. As a result, the MN can communicate using the HoA. In the MN, an application that operates on the MN performs communication, constantly using the IP address called the HoA.

The CoA is used for the source address or destination of actual IPv6 packets. In order to hide movement against the upper application, techniques such as IPv6 in IPv6 encapsulation, mobility header and the like are used. As a result of this, the HoA is notified to the application while the IPv6 address (CoA) actually used is hidden.

Further, when the communication path to the CN is optimized in this Mobile IPv6, after signaling for security or a testing sequence called Return Routability, which will be referred to hereinbelow as "RR", the MN is determined to send a BU for route optimization to the CN. The RR is the function of notifying the CN of the validity of binding between the HoA and the CoA.

The RR is made up of messages sent from the MN to the CN, including HoTI (Home Test Init) sent by way of the HA and CoTI (Care of Test Init) sent directly to the CN and messages returned from the CN to the MN, including HoT (Home Test) returned by way of the HA and CoT (Care of Test) directly returned to the MN. When this RR sequence is completed correctly, the MN transmits BU to the CN in order to give notice of the CoA of itself. As a result of this, the CN can get the correct CoA of the MN and becomes able to send packets directly, or achieve route optimization, instead of sending via the lengthy path passing through the HA.

More specifically, until this route optimization is completed, communication between MN and CN is performed by way of the HA, so that packets are sent between CN and HA by normal IPv6 while the packets are sent between HA and MN, being IPv6 encapsulated in IPv6. After route optimization, packets are directly delivered between MN and CN. In this while HoA is written into an options header.

Since MIPv6 and MIP-derived protocols control movement on the MB basis, they are called host-based mobility protocols. In contrast, anetwork-basedIPmobilityprotocol, in which an MN can move by performing movement control on the network side without installing a special protocol for the movement thereof, has been also proposed by ITEM (Internet Engineering Task Force) (see non-patented document 2, for example).

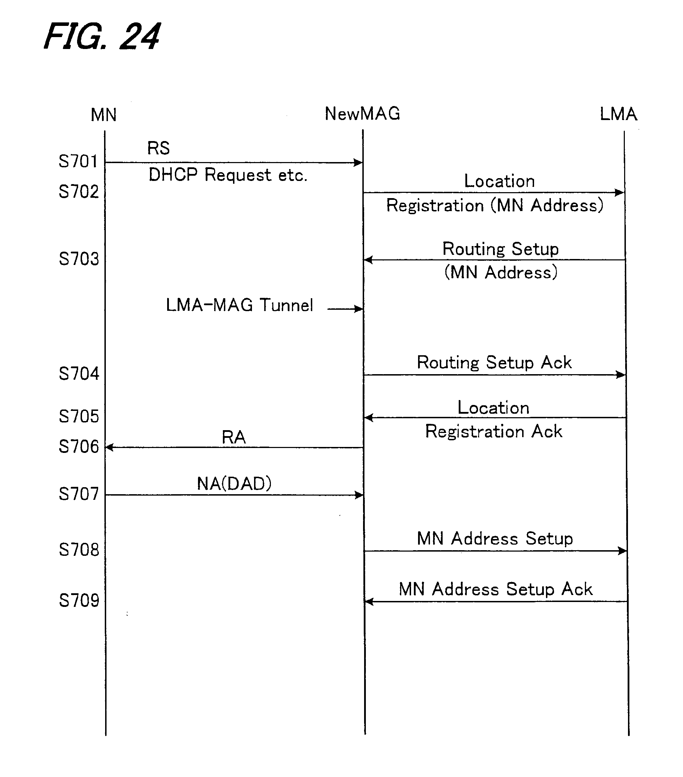

This keeps the MN from using any CoA and is effective in eliminating MN's encapsulation of packets and the like and in eliminating MN's signaling for movement. The sequence of handover based on this first network-based IP mobility protocol will be described with reference to FIG. 24.

First, at S701, after being moved, the MN transmits a network configuration (network setup) request message such as a RS (Router Solicitation, which will be referred to hereinbelow as "RS"), a DHCP Request or the like, to the router or Mobile Access Gateway (which will be referred to hereinbelow as "MAG"), denoted as "NewMAG" in FIG. 24, on a visiting link.

An MAG is a router for relaying between the MN having moved to the link and a route router as a control apparatus for performing IP Mobility control, or Local Mobility Anchor (which will be referred to hereinbelow as "LMA").
The LMA controls a plurality of MAGs connected via network. The LMA manages the identifiers and IP addresses of the MN and MAGs in its storage.
The MAG also manages the identifiers and IP addresses of the MN and LMA in the storage thereof. These pieces of information the MAG manages can be acquired by communication with the LMA.
Between MAG and LMA, packets are tunneled by IPv6 in IPv6 encapsulation and adding a header with reference to the information managed in the storage, thereby achieving correct routing.
In the network described above, it is assumed that the MN sends an RS, herein for example, to the MAG in the link the MN visits.

When receiving the RS from the MN, MAG (NewMAG) transmits location registration (location registration request) to the LMA at S702.

As the LMA receives the location registration, it detects the event of handover and transmits routing setup to MAG(NewMAG) at S703 to set up a tunneling path between MAG(NewMAG) and LMA.

Here, the setup of a tunneling path is to create a configuration in which the LMA encapsulates the packet addressed to the MN so as to be addressed to the MAG and transmits the packet to the MAG the MAG having received the packet decapsulates and transfers the packet to the MN.

The MAG (NewMAG) having received this routing setup transmits a routing setup Ack (Acknowledgement) for confirmation to the LMA at S704.

Further, the LMA having received the location registration from the MAG (NewMAG) transmits a location registration Ack for confirmation to the MAG (NewMAG) at S705.

At S706 the MAG(NewMAG) transmits RA to the MN, and the MN performs address configuration (address setup).

Thereafter, at S707, the MN performs DAD (Duplicate Address Detection, which will be referred to hereinbelow as "DAD") using NA (Neighbor Advertisement, which will be referred to hereinbelow as "NA") so as to confirm that the address is unique and complete the address configuration. The MAG(NewMAG) also transmits the MN address setup to the LMA at S708. At S709, the LMA transmits MN address setup Ack to the MAG(NewMAG).

As a result of completion of setup of this LMA-MAG tunnel route and the MN address configuration, packets are reachable to the MN. This is the way of handover in the network-based mobility protocol. In one words, since the packet addressed to the MN is sent by way of the LMA, it is possible to route the packet to the MN by completing the tunnel between the LMA and MAG.
There is another proposal of a Proxy Mobile IP scheme using a network-based IP mobility protocol, in which an MAG provides a proxy function for MNs in Mobile IP, using an AAA (Authentication Authorization Accounting) server for performing authentication (see non-patented document 3, for example).

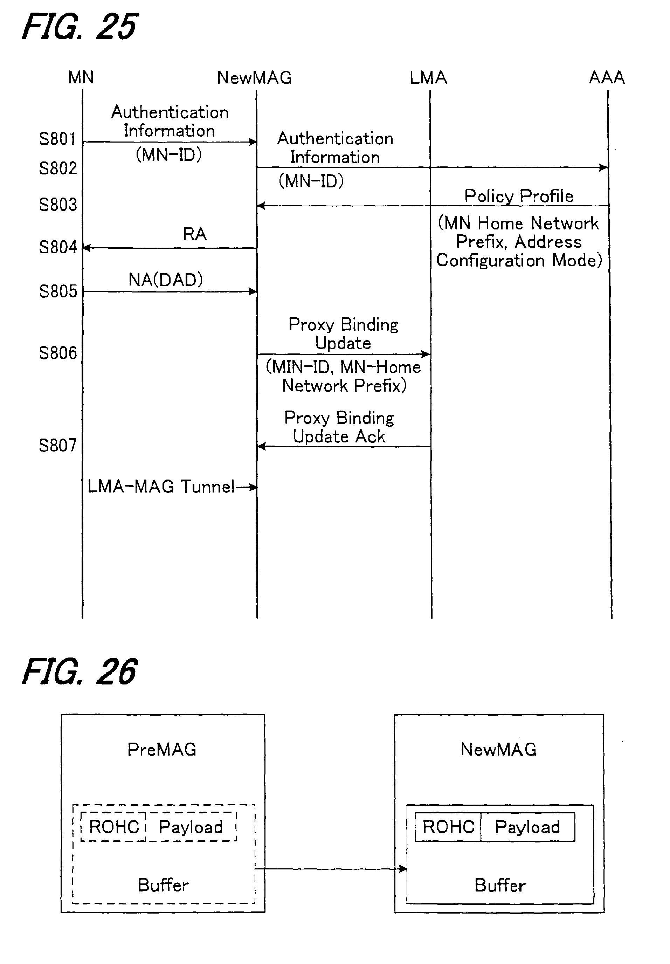

The procedural steps of handover in this second protocol Proxy Mobile IP scheme of network-based IP mobility will be described using a sequence diagram shown in FIG. 25.

First, at S801, after being moved, the MN transmits authentication information including the ID of itself, i.e., the MN-ID, to the MAG(NewMAG).

At S802, the MAG(NewMAG) having received the authentication information from the MN, transmits the authentication information including the MN-ID to the AAA server as an authentication server for authentication.

At S803, the AAA server having received the authentication information from the MAG(NewMAG) checks the validity of the MN and returns a policy profile if it is determined to be valid.
This policy profile includes MN address configuration information such as information on the home network prefix, the configuration scheme (either stateful setup or stateless setup) and the like.

In the MAG (NewMAG) having received from the AAA server the policy profile including this address configuration information, the RA becomes able to be sent to the MN, so that the RA is transmitted to the MN at S804.

The MN having received the RA from the MAG(NewMAG), configures an address and performs NA and DAD at S805. This step may be omitted.

The MAG(NewMAG), after sending RA, transmits Proxy Binding Update to the LMA at S806 in order to create a tunnel to the LMA.
This message includes the MN-ID, home prefix of the MN and the like.

The LMA having received the Proxy Binding Update, returns Proxy Binding Update Ack to the MAG(NewMAG) at S807.

In this way, a bidirectional tunnel is created between the LMA and the MAG so that routing to the MN is made possible.

Also, as a technology of compressing the header of IP/UDP/RTP(Internet Protocol/User Datagram Protocol/Real-time Transport Protocol), Robust Header Compression (which will be called "ROHC" hereinbelow) has been known (see non-patented document 4, for example).

In this ROHC, CID (Context ID) that is a discrimination ID to be notified at the time of initialization is associated with a predicable header field, this information is shared between the compressor for compressing the data and the decompressor for restoring the data, and the compressor transmits the data added with the CID in place of the header while the decompressor restores the header from the CID.

This predicable header field also includes the source IP address that indicates the sender and the destination IP address that indicate the receiver.

Further, assignment of sequence numbers based on W-LSB(Window-Based Least-Significant Bit) enables prediction of other fields and provides robustness against packet loss.

In addition, ROHC has a state and mode. As to the state, the amount of compression is adjusted to three levels, complete header/difference/compressed header to the maximum, in accordance with the link condition. As to the mode, the feedback timing provided by the decompressor is selected from among three kinds, no feedback, feedbackwhen there is a problem, and feedback at all times.

This selection of the state and mode in accordance with the link condition as well as use of W-LSB enables ROHC to provide high compression performance and high robustness.

Based on this ROHC technology, there have been disclosed technologies for transferring packets with their IP header compressed between RNCs (Radio Network Controllers) (see patent document 1, for example).

There has been disclosed as to Mobile MPv4 a system which provides a proxy function necessary as a CN for a terminal that communicates with an MN but has no MIPv4 function (see patent document 2, for example)
Patent document 1:
   Japanese Patent Application Laid-open 2003-224610
Patent document 2:
   Japanese Patent Application Laid-open 2001-224070
Non-patented document 1: Request for Comments(RFC)3775, "Mobility Support in IPv6"
Non-patented document 2: Internet Draft "draft-giaretta-netlmm-dt-protocol"
Non-patented document 3: Internet Draft "draft-sgundave-mip6-proxymip6"
Non-patented document 4: Request for Comments(RFC)3095, "RObust Header Compression (ROHC): Framework and four profiles: TRP, UDP, ESP, and uncompressed".

### Disclosure of Invention

### Problems to be Solved by the Invention

However, packets are compressed at the LMA, and when the packet is transferred from the previously accessed MAG (PreMAG) to the newly accessed MAG (NewMAG) for fast handover as shown in FIG. 26, NewMAG having received the packet cannot recognize the information on the MN from the compressed packet, so that the MAG cannot know to which MN the packet should be delivered.

The present invention has been devised in order to solve the above problem, it is therefore an object of the invention to provide a communication system, control apparatus and router using a network-based IP mobility protocol as well as to a communication method for the same, in which, in a network-based IP mobility protocol, when an MN or LMA functions as a compressor or decompressor and compresses packets, it is possible to realize fast handover when the MN moves and save the band for the last one hop, which is the narrowest band.

### Means for Solving the Problems

In view of the above circumstances, the communication system using a network-based IP mobility protocol according to the first invention is a system in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus, **characterized in that** the control apparatus performs a compression process of a header of data received from a foreign network, and adds an options header to the header of the data, the options header being capable of identifying the mobile terminal as a destination, and transmits the data to the router on the same link to which the mobile terminal belongs, and, the router identifies the mobile terminal based on the options header and forwards the data to the mobile terminal.

The communication system using a network-based IP mobility protocol according to the second invention is **characterized in that** the mobile terminal performs a process of compressing the header based on compression information shared with the control apparatus to transmit the data to the router on the same link; the router, based on bearer information when the data is transmitted from the mobile terminal, identifies the mobile terminal, adds an options header to the data header, the options header being capable of identifying of the mobile terminal, and transmits the data to the control apparatus; and, the control apparatus identifies the mobile terminal based on the options header, extends the header by reference to the compression information on the mobile terminal and performs routing.

The communication system using a network-based IP mobility protocol according to the third invention is **characterized in that** when the mobile terminal has moved to another network, the router on the network which the mobile terminal has newly accessed, receives a notice including the identifier of the mobile terminal from the mobile terminal and transmits a notice including the identifier of the mobile terminal and the identifier or IP address of the router, to the control apparatus; the control apparatus transmits to the router to which the mobile terminal has previously accessed, a buffer forward command notice for requesting transfer of the data addressed to the mobile terminal from the previously accessed router to the newly accessed router; and, the previously accessed router adds an options header to the buffer data addressed to the mobile terminal, the options header being capable of identifying the mobile terminal, and transmits the data to the newly accessed router.

The communication system using a network-based IP mobility protocol according to fourth invention is **characterized in that** when the mobile terminal has moved to another network, the router on the network which the mobile terminal newly has accessed, receives a notice including the identifier of the mobile terminal from the mobile terminal and transmits a notice including the identifier of the mobile terminal and the identifier or IP address of the router, to the control apparatus; the control apparatus transmits to the router the mobile terminal has newly accessed, the identifier or IP address of the previously accessed router; the newly accessed router transmits a notice including the identifier of the mobile terminal and the identifier or IP address of the router to the previously accessed router; and, the previously accessed router adds an options header to the buffer data addressed to the mobile terminal, the options header being capable of identifying the mobile terminal, and transmits the data to the newly accessed router.

The communication system using a network-based IP mobility protocol according to the fifth invention is **characterized in that** the control apparatus executes a proxy function for the mobile terminal when the mobile terminal performs transmission and reception of data based on a Mobile IP protocol.

The control apparatus, according to the sixth invention is a control apparatus, which is used for a system in which a mobile terminal, based on the network-based IP mobility protocol, performs communication by transmission and reception of data through a router that belongs to a same link, based on an address uniquely assigned to the mobile terminal, and which performs control of changing over communication when the mobile terminal has moved to another network, comprising: a communication means for performing transmission and reception of data with a foreign network or the router; a storing means for storing header compression information; a compression processing means for compressing or extending the header of the data based on the header compression information; and, a tunnel processing means for adding an options header to the data, the options header being capable of identifying the mobile terminal, and discriminating the mobile terminal from the options header added to the data.

The control apparatus according to the seventh invention further includes a control means which, when the mobile terminal has moved to another network, creates a buffer forward command notice including the identifier of the mobile terminal and the identifier or IP address of the newly accessed router for commanding transfer of the data addressed to the mobile terminal from the previously accessed router to the newly accessed router, wherein the communication means transmits the buffer forward command notice to the previously accessed router.

The control apparatus according to the eighth invention further includes a control means which, when the mobile terminal has moved to another network, creates a notice including the identifier of the mobile terminal and the identifier or IP address of the previously accessed router, wherein the communication means transmits the notice to the newly accessed router.

The control apparatus according to the ninth invention is **characterized in that** the control means executes a proxy function for the mobile terminal when the mobile terminal performs transmission and reception of data based on a Mobile IP protocol.

The control apparatus according the tenth invention is **characterized in that** the storing means stores a binding cache as the communication information on the mobile terminal for relaying based on the Mobile IP protocol, and wherein a Mobile IP processing means for relaying between the mobile terminal and the terminal using the Mobile IP protocol is provided when the received data is used for communication between the mobile terminal controlled by the communication means and a terminal making use of the Mobile IP protocol.

The control apparatus according to eleventh invention is **characterized in that** when the data is received from the foreign network, the communication means outputs the data to the Mobile IP processing means, the Mobile IP processingmeans determines whether the data is based on Mobile IP protocol and outputs the data to the compression processing means, the compression processing means performs a compression process of the data to output the data to the tunnel processing means, and the tunnel processing means adds an options header to the data to transmit the data to the router.

The control apparatus according to twelfth invention is **characterized in that** when the data is received from the router, the communication means outputs the data to the tunnel processing means, the tunnel processing means deletes the options header and identifies the mobile terminal from the options header to output the data to the compression processing means, the compression processing means performs an extension process of the header of the data to output the data to the Mobile IP processing means, and the Mobile IP processing means performs routing of the data by reference to the binding cache.

The router according to the thirteenth invention is a router for performing transmission and reception of data with amobile terminal that belongs to the same link and performs communication using a network-based IP mobilityprotocol based on an address uniquely assigned to the mobile terminal under the control of a control apparatus, comprising: a first communicationmeans which performs transmission and reception of data with the mobile terminal; a second communication means which performs transmission and reception of data with the control apparatus; and a tunnel processing means for adding an options header to the data from the mobile terminal, the options header being capable of identifying the mobile terminal, and deleting the attached options header from the data from the control apparatus and identifying the mobile terminal, wherein the first communication means identifies the mobile terminal based on bearer information when data is received from the mobile terminal.

The router according to the fourteenth invention is **characterized in that** when the mobile terminal has moved to another network and when the second communication means receives from the control apparatus a buffer forward command notice including the identifier of the mobile terminal and the identifier or IP address of the newly accessed router for commanding transfer of data addressed to the mobile terminal to the newly accessed router, the tunnel processing means is caused to set up buffer transfer, add the options header to the buffer data and forward the data to the newly accessed router.

The router according to the fifteenth invention is **characterized in that** when the mobile terminal has moved from another network and when the second communication means receives from the control apparatus a notice including the identifier of the mobile terminal and the identifier or IP address of the previously accessed router, the notice including the identifier of the mobile terminal and the identifier of the newly accessed router is transmitted to the previously accessed router.

The communication method according to the sixteenth invention is a communication method, which, using a network-based IP mobility protocol, causes a mobile terminal to perform transmission and reception of data through a router that belongs to the same link, based on an address uniquely assigned to the mobile terminal, and causes a control apparatus to perform control of changing over communication of the mobile terminal when the mobile terminal has moved to another network, **characterized in that** the mobile terminal is caused to execute a step of compressing the header of data, and a step of transmitting the data to the router; the router is caused to execute a step of identifying the mobile terminal from the bearer information of the received data from the mobile terminal, and a step of adding an options header that enables identification of the mobile terminal to the data and a step of transmitting the data to the control apparatus; and the control apparatus is caused to execute a step of deleting the options header of the data received from the router and identifying the mobile terminal from the options header, and a step of extending the header of the data by reference to the compression information on the mobile terminal, thereby performing compression or extension and routing of data between the control apparatus and the mobile terminal.

The communication method according to the seventeenth invention is **characterized in that** the control apparatus is caused to execute a step of compressing the header of the data received from a foreign network by reference to the compression information, a step of adding an options header to the data, the options header being capable of identifying the mobile terminal to which the data is addressed, and a step of transmitting the data to the router; and the router is caused to execute a step of deleting the options header of the data received from the control apparatus and identifying the mobile terminal from the options header, and a step of transmitting the data to the mobile terminal.

The communication method according to the eighteenth invention is **characterized in that** when the mobile terminal has moved to another network, the control apparatus is caused to execute a step of transmitting a buffer forward command notice that instructs the previously accessed router to transfer the buffer data addressed to the mobile terminal to the newly accessed router; and,
the previously accessed router is caused to execute a step of transferring the buffer data attached with the options header to the newly accessed router.

The communication method according to nineteenth invention is **characterized in that** when the mobile terminal has moved to another network, the control apparatus is caused to execute a step of transmitting a notice including the identifier of the mobile terminal and the identifier or IP address of the previously accessed router, to the newly accessed router; the newly accessed router is caused to execute a step of transmitting a notice including the identifier of the mobile terminal and the identifier or IP address of the router, to the previously accessed router; and, the previously accessed router is caused to execute a step of transferring the buffer data attached with the options header to the newly accessed router.

The communication method according to the twentieth invention is **characterized in that** when a terminal that communicates with the mobile terminal performs transmission and reception of data based on the Mobile IP protocol, the control apparatus executes a proxy function for the mobile terminal.

### Effect of the Invention

According to the present invention, in a network-based IP mobility protocol that compresses and extends data at the control apparatus (LMA) and a mobile terminal (MN), for the communication between the control apparatus (LMA) and the router (MAG), the router can perform correct routing regardless of the header being compressed, by adding an options header that enables identification of the mobile terminal, to the data.

Further, since when receiving data from a mobile terminal, the router can identify the mobile terminal based on the bearer information, it is possible for the router to perform correct routing to the control apparatus even if the header is compressed.

Further, when the mobile terminal is handed over and the previously accessed router transfers the data buffered and addressed to the mobile terminal to the router after moving, the data is added with an options header that enables identification of the mobile terminal, so that the newly accessed router can perform correct routing to the mobile terminal.

Moreover, at the same time, when receiving a packet from a terminal that uses Mobile IP, the control apparatus provides an Mobile IP proxy function so as to enable header compression at the control apparatus, whereby the mobility signal or header in Mobile IP protocol becomes unnecessary between the control apparatus and the mobile terminal, and it is possible to prevent reduction in header compression efficiency.

### Brief Description of Drawings

[FIG. 1] is a diagram showing a schematic configuration of a network in the first embodiment.
[FIG. 2] is a sequence diagram showing the procedural steps of the process in the first embodiment.
[FIG. 3] is a block diagram showing a configuration of an MAG in the first embodiment.
[FIG. 4] is a block diagram showing a configuration of an LMA in the first embodiment.
[FIG. 5] is a diagram showing a schematic configuration of a network in the second embodiment.
[FIG. 6] is a diagram showing a configuration of an MAG in the second embodiment.
[FIG. 7] is a diagram showing a configuration of an LMA in the second embodiment.
[FIG. 8] is one example of IP address information in the second embodiment.
[FIGs. 9A-9B] are examples of data on a network-based IP mobility protocol that is controlled by an LMA in the second embodiment.
[FIG. 10] is one example of BC information held by an LMA in the second embodiment.
[FIG. 11] is a sequence diagram showing the procedural steps when an LMA executes an initial Mobile IP proxy function process in the second embodiment.
[FIG. 12] is one example of header information at the beginning of communication in the second embodiment.
[FIG. 13] is a flow for determining a provision of an MIP proxy function in the second embodiment.
[FIG. 14] is one example of BC information held in an LMA in the second embodiment.
[FIGs. 15A-15B] are packet format examples relating to header replacement in the second embodiment.
[FIGs. 16A-16C] are packet format examples relating to header compression and header replacement in the second embodiment.
[FIGs. 17A-17B] are packet format examples relating to decapsulation in the second embodiment.
[FIGs. 18A-18B] are examples of data relating to NetLMM-MNs controlled by MAGs in the second embodiment.
[FIGs. 19A-19E] are format examples relating to packet encapsulation and decapsulation, header extension and header replacement in the second embodiment.
[FIG. 20] is a sequence diagram when handover is executed in the second embodiment.
[FIG. 21] is a sequence diagram when handover is executed in the second embodiment.
[FIG. 22] is a sequence diagram when handover is executed in the second embodiment.
[FIG. 23] is one example of data relating to a network-based IP mobility protocol controlled by an LMA in the second embodiment.
[FIG. 24] is a sequence diagram showing the procedural steps of a handover technique based on a conventional network-based mobility protocol.
[FIG. 25] is a sequence diagram showing the procedural steps of a handover process based on a Proxy Mobile IP scheme of a conventional network-based IP mobility protocol.
[FIG. 26] is a diagram showing how buffer is forwarded in the prior art.

### Description of Reference Numerals

- 1: MN
- 2,4,24,33,34: MAG
- 3,26: LMA
- 5: Internet
- 6,7,11,41,42,46,47: communication means
- 8,12,44,52: network-based IP mobility protocol processor
- 9,13,45,51: storage
- 10,14,43,49: tunneling processor
- 15,50: Header compression and extension processor
- 21,22: NetLMM-MN
- 23,29: MIP-MN
- 25: NetLMM domain
- 27: Internet/WAN/CoreNetwork
- 28,30: HA
- 31,32: Router
- 35: AAA server
- 48: Mobile IP proxy processor

### Best Mode for Carrying Out the Invention

Next, the embodiments of the present invention will be described with reference to the drawings.

### [The first embodiment]

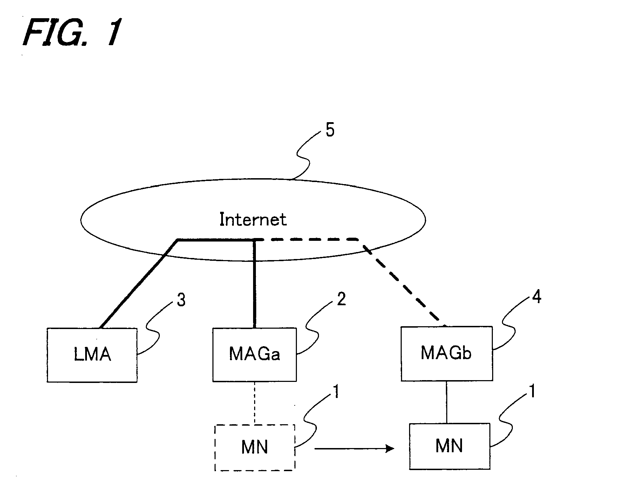

FIG. 1 is a diagram showing a schematic configuration of a network in the present embodiment.

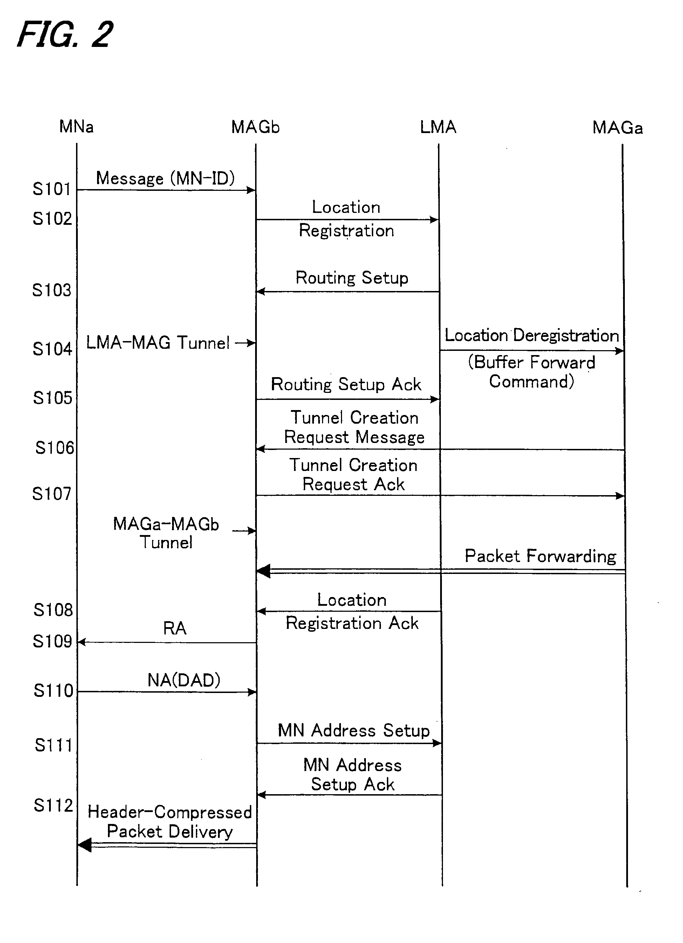

FIG. 2 is a sequence diagram showing the procedural steps of a process in the present embodiment.

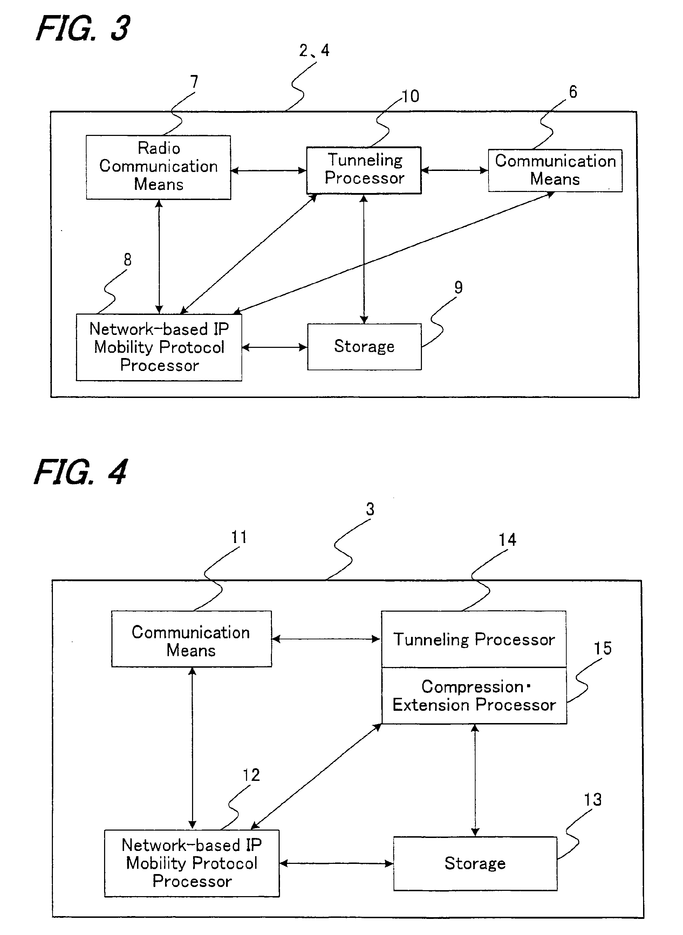

FIG. 3 is a block diagram showing a configuration of an MAG in the present embodiment.
FIG. 4 is a block diagram showing a configuration of an LMA in the present embodiment.

As shown in FIG. 1, initially, an MN 1 is located on the link of an MAGa 2. An LMA 3 controls MAGa 2 and an MAGb 4. Also, LMA 3, MAGa 2 and MAGb 4 are connected through Internet 5.

In the present embodiment, MN 1 is handed over from the link of MAGa 2 to the link of MAGb 4. Further, LMA 3 and MN 1 have the function of the compressor and decompressor for header compression.

Hereinbelow, MAGs. 2 and 4 in FIG. 3 and LMA 3 in FIG. 4 will be described.
As shown in FIG. 3, MAGs 2 and 4 are configured by inclusion of: a communicationmeans 6 that communicates with LMA 3 through wired path such as LAN (Local Area Network), the Internet or the like; a radio communication means 7 that communicates with MN 1 by wireless; a network-based IP mobility protocol processor 8 that performs control as to network-based IP mobility protocols; a storage 9 made of a database section and a temporary storage capable of temporarily storing; and a tunneling processor 10.

As shown in FIG. 4, an LMA 3 is also configured by inclusion of a communication means 11, a network-based IP mobility protocol processor 12, a storage 13 and a tunneling processor 14. The difference from MAGs 2 and 4 is that it includes a compression and extension processor 15 for performing compression and extension of headers.

Further, stored in storage 9 of the MAG is the header compression information in LMA 3 shared with the MN, received from LMA 3.

At S101, when MN 1 has moved to the link of MAGb 4, MN 1 transmits address configuration information including MN-ID, which is the usual identifier of MN 1, to MAGb 4 or the link local multicast address. In most cases, this is RS and/or NA. It is assumed herein that this is RS.

Network-basedIP mobility protocol processor 8 of MAGb 4 having received the RS from radio communication means 7 stores MN-ID into storage 9, and generates location registration at least including MN-ID and the identifier of MAGb 4, MAGb-ID or the IP address of MAGb 4 and transmits it from communication means 6 to LMA 3, at S102.

Then, network-based IP mobility protocol processor 12 of LMA 3 having received the location registration via communication means 11, extracts MN-ID included in the location registration, and searches the data held at storage 13 of LMA 3 for the current state of MN 1, based on this MN-ID as a key. As a result of this, network-based IP mobility protocol processor 12 grasps from the data that MN 1 is currently belonging to MAGa 2. As receiving the location registration from MAGb 4, network-based IP mobility protocol processor 12 recognizes that MN 1 has moved, though the data shows that MN 1 is currently belonging to MAGa 2.

Uponthis, atS103, network-based IP mobility protocol processor 12 of LMA 3 creates routing setup(routing setup command) as the message for creating a tunnel between LMA 3 and MAGb 4, at least including LMA-ID, which is the identifier of LMA 3 and the global address of MN 1 and transmits it to MAGb 4 from communication means 11.

At S104, network-based IPmobility protocol processor 12 of LMA 3 also creates location registration as the message for deleting the LMA 3-MAGa 2 tunnel, and transmits this combined with a buffer forward command, or transmits location registration and a buffer forward command, separately to MAGa 2. This message at least includes MAGb-ID, the identifier of MAGb 4 or the IP address of MAGb 4, and MN-ID.

Network-based IP mobility protocol processor 8 of MAGb 4 having received the routing setup from LMA 3, creates a tunnel to LMA 3 and transmits routing setup Ack to LMA 3 at S105.

In this tunnel creation, tunneling processors 10 and 14 for MN 1 are created in LMA 3 and MAGb 4. LMA 3' s tunneling processor 14 for MN 1 assigns the LMA 3's IP address as the source address and the MAGb 4's address as the destination address to the outer header of the packet addressed to MN 1 to be forwarded to MAGb 4 and also performs a creating process of an IPv6 in IPv6 packet including MN-ID or MN-IP as an options header of the outer header.

Further, this tunneling processor 14 of LMA 3 compresses the inner IP header·UDP/TCP header·RTP header in accordance with ROHC context in linkage with header compression and extension processor 15. During this, referring to the destination address of the inner header, MN-ID or MN-IP is added as the options header of the outer header, at the time of compression. Tunneling processor 10 of MAG 4, when receiving a packet directed to MN 1 from LMA 3, deletes the outer header and the options header of the outer header and transmits the packet to radio communication means 7 associated with MN 1 that is identified from the options header.

When receiving a packet from MN 1, tunneling processor 10 of MAGb 4 sets MAGb-IP as the outer source address, LMA-IP as the outer destination address, and grasps MN-ID or MN-IP of MN 1 identified from radio communication means 7 and adds the MN-ID or MN-IP as the options header of the outer header and transmits the packet to LMA 3. It is possible to identify from which MN 1 the packet was received can be identified from bearer information by ratio communication means 7.

Tunneling processor 14 of LMA 3 having received the packet from MN 1 by way of MAGb 4, in linkage with header compression and extension processor 15, identifies the ROHC context stored in storage 13, based on the MN information obtained from the options header when the outer header and the options header of the outer header are deleted, and extends the headers based on this ROHC context and transmits the packet to Internet 5.

Network-based IP mobility protocol processor 8 of MAGa 2 transmits a tunnel creation request message for fast handover to MAGb 4 at S106 to create a tunnel from MAGa 2 to MAGb 4. In this tunnel creation, tunneling processor 10 for MN 1 is created in MAGa 2 and MAGb 4. As the tunnel from MAGa 2 to MAGb 4 is created, Network-based IP mobility protocol processor 8 of MAGb 4 transmits tunnel creation request Ack to MAGa 2 at S107.

Tunneling processor 10 for MN 1 of MAGa 2 assigns the MAGa 2's IP address as the source address and the MAGb 4's address as the destination address, to the outer header, and also performs a creating process of an IPv6 in IPv6 packet by adding MN-ID or MN-IP as an options header of the outer header. This options header is generated by referring to the options header of the outer header of the packet from LMA 3.

Tunneling processor 10 of MAGb 4 having received the packet forwarded from MAGa 2 deletes the outer header and the options header of the outer header and identifies MN 1 from the options header and forwards the packet from radio communication means 7 associated with this MN 1.

Network-based IP mobility protocol processor 12 of LMA 3 having received routing setup Ack from MAGb 4 transmits location registration Ack at least including prefix information on MN 1 to MAGb 4, at S108.

Network-based IP mobility protocol processor 8 of MAGb 4 having received the location registration Ack transmits RA based on the aforementioned prefix information to MN 1, at S109.

MN 1 having received the RA from MAGb 4 transmits NA to the link, following the DAD procedure at S110.

At S111, network-based IP mobility protocol processor 8 of MAGb 4 having received the NA from MN 1, transmits MN address setup including MAGb-ID, MN 1's address and MN-ID to LMA 3. At S112, network-based IP mobility protocol processor 12 of LMA 3 transmits MN address setup for confirmation to MAGb 4, then packet delivery from MAGb 4 to MN 1 is started.

As a result of the above, since the header that enables identification of MN 1 is added from MAGa 2 to MAGb 4 by the instruction of LMA 3, MAGb 4 can identify MN 1 from this options header, making it possible to deliver the packet to MN 1. Accordingly, it is possible to deliver the packet sent from MAGa 2 and the packet sent from LMA 3, sequentially to MN 1.

### [The second embodiment]

In the present embodiment, description will be made on an example in which the LMA provides an IP proxy function and performs header compression so as to achieve handover without packet loss.

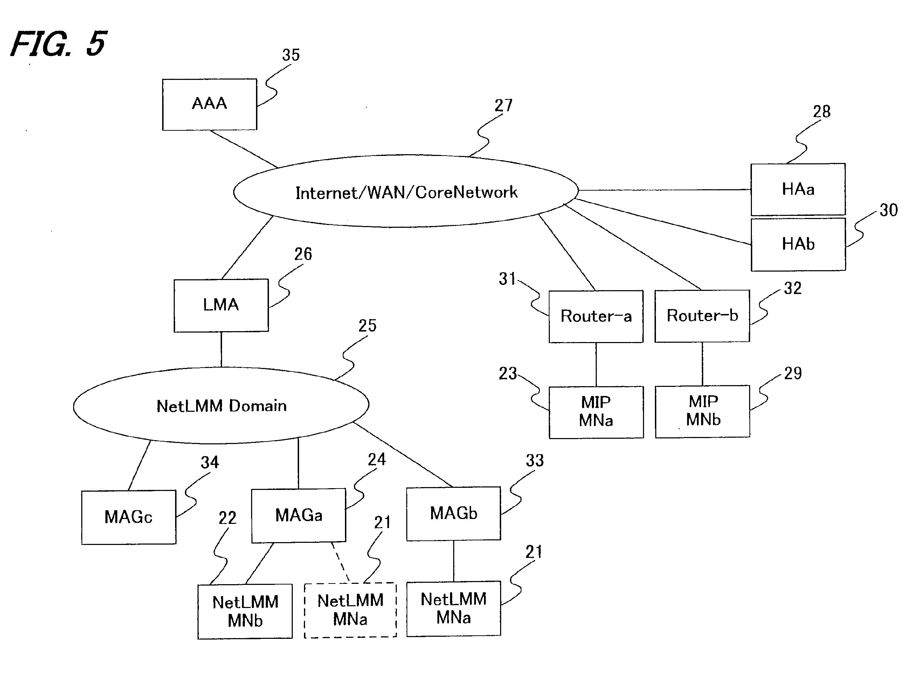

FIG. 5 is a diagram showing a schematic configuration of a network in the present embodiment.

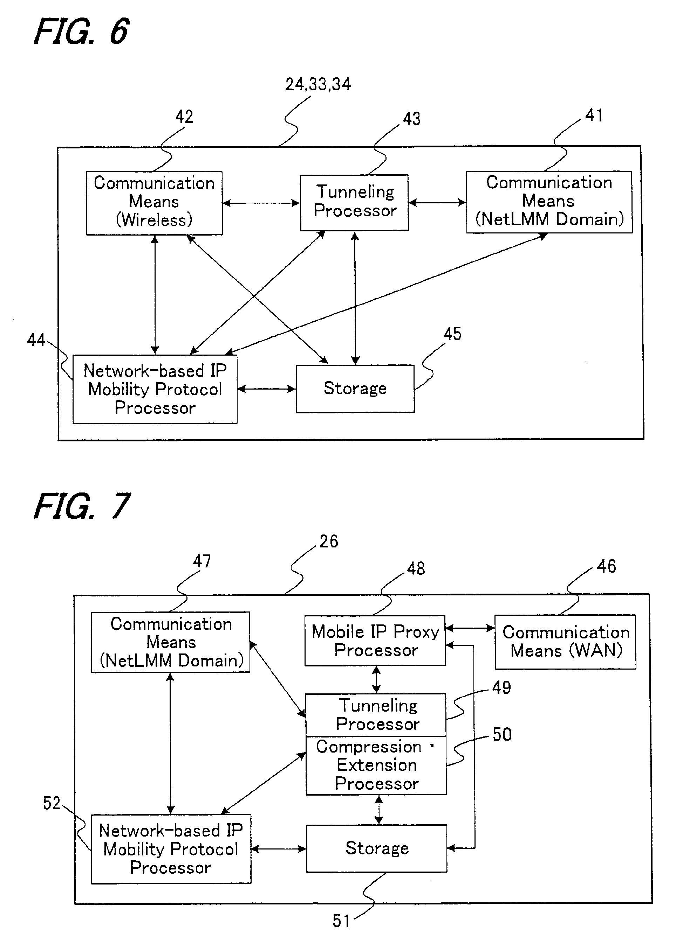

FIG. 6 is a diagram showing an MAG configuration in the present embodiment.
FIG. 7 is a diagram showing an LMA configuration in the present embodiment.

As shown in FIG. 5, a NetLMM-MNa 21 and NetLMM-MNb 22 communicate with MIP-MNs. The present embodiment will be described starting from a state where NetLMM-MNb 22 and an MIP-MN have been already in communication while NetLMM-MNa 21 and an MIP-MNa 23 start communication. Here, it is assumed that in this stage NetLMM-MNa 21 is located on the link of MAGa 24. Further, a NetLMM domain 25 is a local domain that is connected by the IP integrated to Internet 27 by an LMA 26. This NetLMM domain 25 is an RAN (Radio Access Network) etc. for mobile phones, for example.

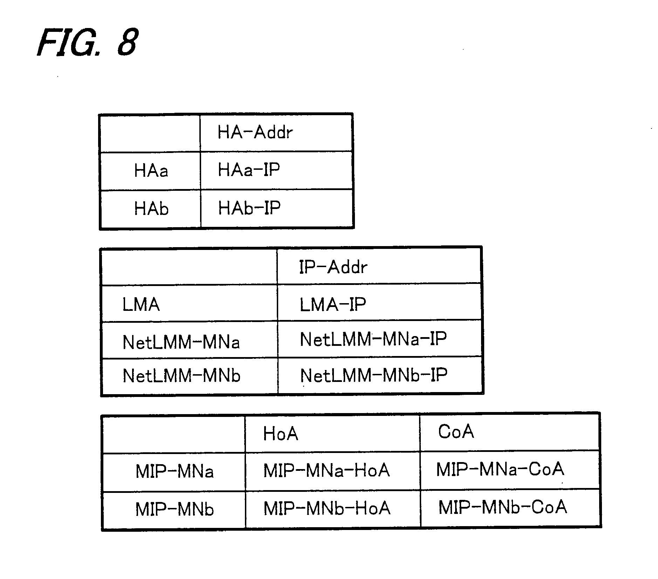

Further, FIG. 8 shows the addresses of different nodes. Internet 27 in FIG. 5 is an unspecified network having the following features.

The home address of MIP-MNa 23 is MIP-MNa-HoA. This address is the address on the link of an HAa 28. Packets addressed to MIP-MNa-HoA are routed to HAa 28. Similarly, the home address of an MIP-MNb 29 is MIP-MNb-HoA. This address is the address on the link of an HAb 30. Packets addressed to MIP-MNb-HoA are routed to HAb 30.

Further, the care-of address of MIP-MNa 23 is MIP-M Na-CoA, which is the address on the link of Router-a 31, and packets addressed to MIP-MNa-CoA are routed to Router-a 31. Similarly, the care-of address of MIP-MNb 29 is MIP-MNb-CoA, which is the address on the link of Router-b 32, and packets addressed to MIP-MNb-CoA are routed to Router-b 32.

The address of NetLMM-MNa 21 is NetLMM-MNa-IP and the address of NetLMM-MNb 22 is NetLMM-MNb-IP, and packets addressed to these addresses (NetLMM-MNa-IP and NetLMM-MNb-IP) are routed to LMA 26.

Further, the MAGs controlled by LMA 26 are MAGa 24, MAGb 33 and MAGc 34. The present embodiment will be described by taking an example in which NetLMM-MNa 21 moves from the link of MAGa 24 to the link of MAGb 33.

Hereinbelow, the MAG in FIG. 6 and the LMA in FIG. 7 will be described.

As shown in FIG. 6, the communication means of the MAG typically corresponds to the device processor in the OS (Operating System) associated with the actual communication interface. The MAG in the present embodiment has two communication means, 41 for NetLMM domain and 42 for wireless devices.

This communication means 42 for wireless devices has a function of identifying an MN from its MAC address etc., and can give notice of MN-ID to tunneling processor 43 or network-based IP mobility protocol processor 44, can give notice of MAC address information to tunneling processor 43 or network-based IP mobility protocol processor 44, or can deliver the information for identifying an MN to tunneling processor 43 or network-based IP mobility protocol processor 44, by creating an emulated device for every MN. Further, when an MN is identified from the MAC address, MN-ID and MAC address have been stored in storage 45 in an associated manner.

As shown in FIG. 7, the communication means of LMA 26 typically corresponds to the device processor in the OS associated with the actual communication interface (e.g., Ethernet card etc.). LMA 26 in the present embodiment has two communication means, 46 for WAN (Wide Area Network, Internet/CoreNetwork etc., can be considered as WAN) and 47 for NetLMM domain.

In contrast, mobile IP proxy processor 48/tunneling processor 49/header compression and extension processor 50 are emulated device processors, which are handled on the OS equivalently to the aforementioned device processor.

Storage 51 is comprised of a database portion for storing permanent data and a temporary storage capable of temporarily storing.

Network-based IP mobility protocol processor 52 performs exchange of network-based IP mobility protocol messages (protocol-wise process), creating and controlling tunneling processor 49/header compression and extension portion 50, storing and deleting data of storage 51 and others.

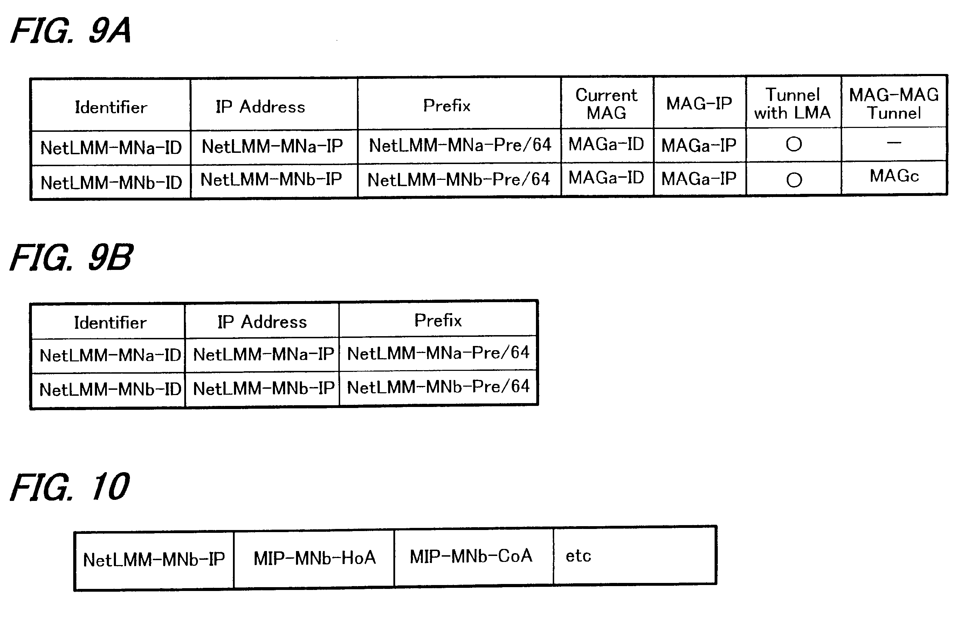

In the case where the first network-based IP mobility protocol described in the conventional example is used, LMA 26 controls two nodes. LMA 26 holds information, as shown in FIG. 9A, on these two in the database in storage 51 of itself.

When the second network-based IP mobility protocol is used, the LMA is connected to an AAA server 35 for performing authentication etc., via Internet 27, as shown in FIG. 5, and AAA server 35 holds associated information of NetLMM-MN IDs, NetLMM-MN addresses, prefix information etc., as shown in FIG. 9B.

FIG. 10 shows one example of BC (Binding Cache) stored in storage 51 of LMA 26. For NetLMM-MNb 22, it is assumed that the BC as shown in FIG. 10 has been already held. "ETC" in the diagram denotes other information, including, for example, the lifetime, nonces, (numerical values such as keys to be exchanged for the RR procedure) or the like.

Herein, it is assumed that NetLMM-MNa 21 and MIP-MNa 23 start communication.

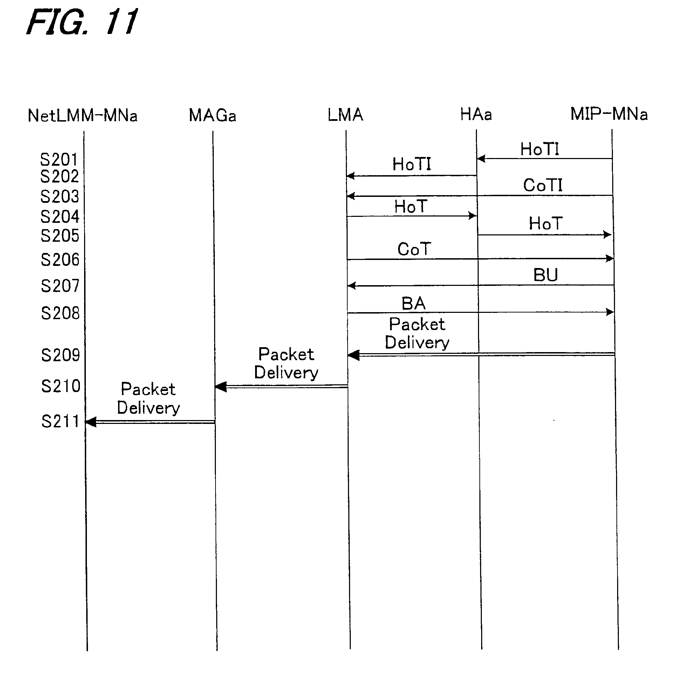

FIG. 11 is a sequence diagram showing the procedural steps when LMA 26 executes an initial Mobile IP proxy function process.

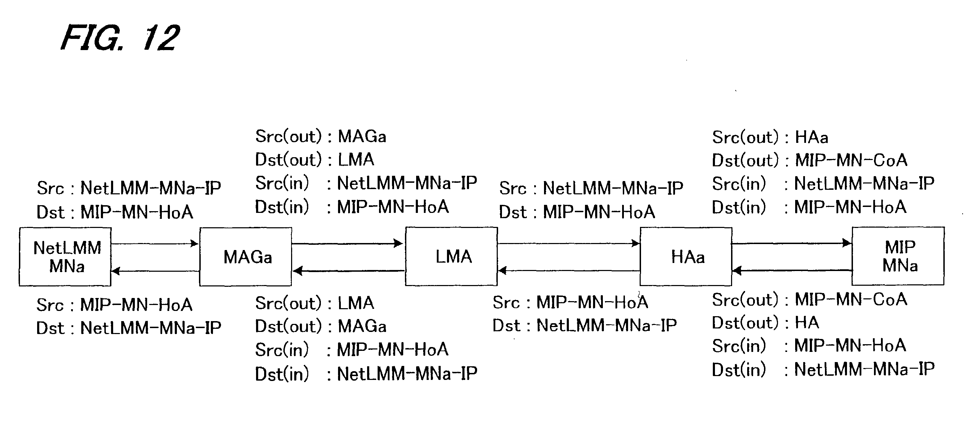

When communication between NetLMM-MNa 21 and MIP-MNa 23 starts, the communication is initially made through HAa 28. As a result, the state of communication at the initial stage is given as shown in FIG. 12. The thick arrows denote communication using encapsulation.

Communication between NetLMM-MNa 22 and MAGa 24 is performed in normal IPv6 with NetLMM-MNa 22 assigned as the source address and HoAof MIP-MNa 23 as the destination address.

Further, communication between MAGa 24 and LMA 26 is performed by tunnel setup in such a manner that network-based IP mobility protocol processor 44 or 52 of MAGa 24 or LMA 26 assigns the MAGa 24 and LMA 26' s addresses as the addresses in the outer header of the packet.

Further, between LMA 26 and HAa 28, the packet header is removed and communication is performed in normal IPv6.

Next, communication between HAa 28 and MIP-MNa 23 is performed by Mobile IP tunnel setup in such a manner that the addresses in the outer header are set with HAa 28 and CoA MIP-MNa 23.

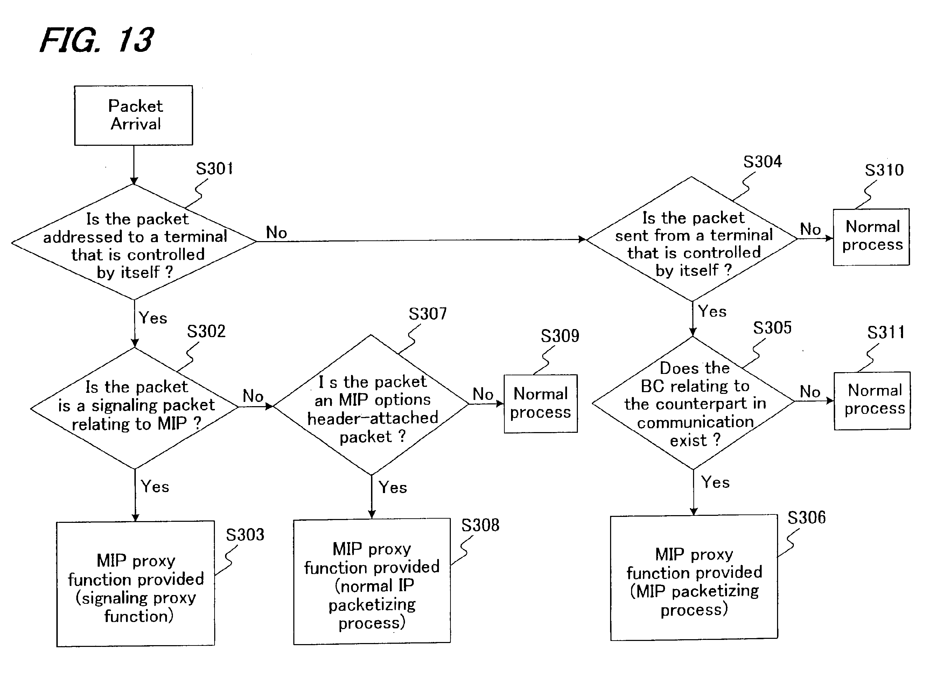

This initial packet reaches LMA 26. Since the packet from MIP-MN is a packet entering from communication means 46 on the WAN side, it is input to Mobile IP proxy processor 48 first. This Mobile TIP proxy processor 48 determines whether a Mobile IP proxy process should be performed following the flowchart shown in FIG. 13.

The Mobile IP proxy process includes three functions when roughly classified.

The process includes: the function for performing Mobile IP signaling by proxy; the function of shaping the options header-attached packet sent from MIP-MN into a normal IP packet and forwarding it to NetLMM-MN; and the function of shaping the normal IP packet sent from NetLMM-MN and addressed to MIP-MN into an options header-attached Mobile IP packet and transmitting it.

First, a packet reaches Mobile IP proxy processor 48 of LMA 26, Mobile IP proxy processor 48 determines whether the packet is addressed to a terminal controlled by itself, at S301.

Here, the answer is "Yes", Mobile IP proxy processor 48 determines whether the packet is a signaling packet associated with MIP, at S302.

Here, the answer is "Yes", Mobile IP proxy processor 48 performs an MIP proxy function process (signaling proxy function process) at S303.

When the answer is "No" at S302, Mobile IP proxy processor 48 determines whether the packet is one that is sent from a terminal controlled by itself, at S304.

Here, the answer is "Yes", Mobile IP proxy processor 48 determines whether storage 51 holds the BC associated with the terminal of the communication partner, at S305.

Here, the answer is "Yes", Mobile IP proxy processor 48 performs an MIP proxy function process (MIP packetizing process) at S306.

When the answer is "No" at S302, Mobile IP proxy processor 48 determines whether the packet is an options header-attached packet at S308.

Here, the answer is "Yes", Mobile IP proxy processor 48 performs an MIP proxy function process (normal IP packetizing process) at S308.

If the answer is "No" at S304, S305 or S307, Mobile IP proxy processor 48 performs a normal IP routing process at S309, S310 or S311.

Since the initial packet cannot be distinguished from normal IPv6 packets, the packet is determined not to be subjected to a Mobile IP proxy process and is forwarded to tunneling processor 49/header compression and extension processor 50. The process that follows is unrelated to the present invention so that description is omitted.

As the communication starts, MIP-MNa 23 sets about the RR procedure for route optimization.

MIP-MNa 23 transmits HoTI at S201 and S202 and CoTI at S203, to the address of NetLMM-MNa-IP.

These HoTI and CoTI reach LMA 26. Since these are the packets entering from communication means 46 on the WAN side, they are input to Mobile IP proxy processor 48 first. This Mobile IP proxy processor 48 determines whether to perform a Mobile IP proxy process in accordance with the flow chart shown in FIG. 13. Since these packets are Mobile IP signaling packets that are addressed to NetLMM-MNa 21 that is controlled by LMA 26, it is determined that the Mobile IP proxy process at S303 should be done.

Since HoTI and CoTI are Mobile IP signaling, the processor generates HoT and CoT in place of NetLMM-MNa 21. Since this process is performed as proxy for NetLMM-MNa 21, the packets (HoT, CoT) are created with NetLMM-MN-IP set as the source address, so that HoT is transmitted to MIP-MNa 23 through S204 and S205 and CoT transmitted at S206.

In MIP-MNa 23 having received the HoT and CoT generates BU at S207 and addresses and transmits to NetLMM-MNa-IP.

This BU reaches LMA 26. Since this is a packet entering from communication means 46 on the WAN side, it is input to Mobile IP proxy processor 48 first. This Mobile IP proxy processor 48 determines whether to perform a Mobile IP proxy process in accordance with the flow chart shown in FIG. 13. Since this packet is BU, that is, a Mobile IP signaling packet that is addressed to NetLMM-MNa 21 which is controlled by LMA 26, it is determined that the Mobile IP proxy process at S303 should be done.

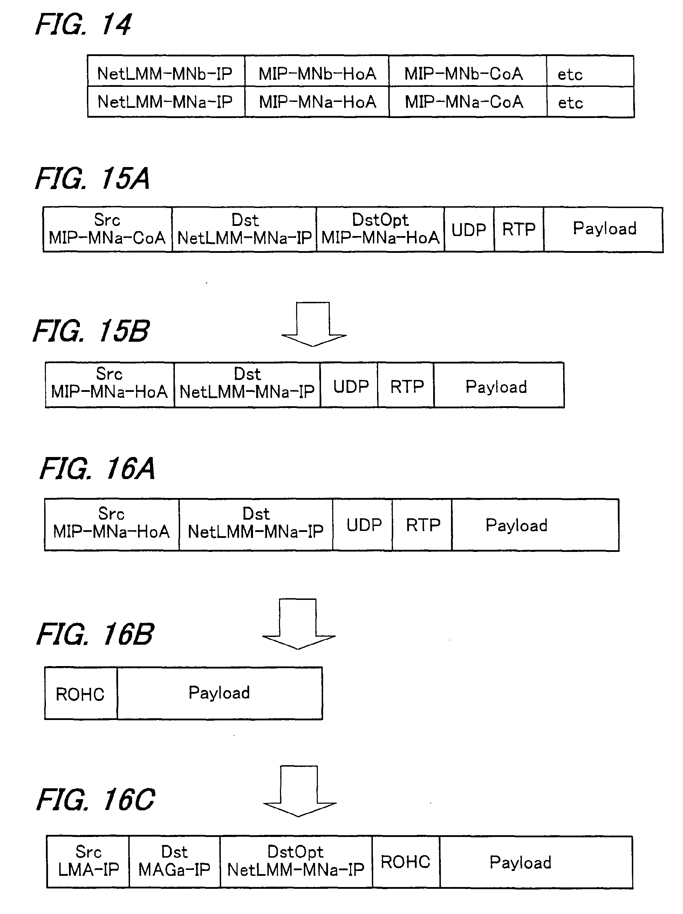

Since the received packet is BU, Mobile IP proxy processor 48 of LMA 26 generates BC. At this time, since LMA 26 controls a plurality of nodes and offers the Mobile IP proxy function to the plural nodes, it creates BC for NetLMM-MNa 21. That is, the BC is generated in association with NetLMM-MNa-ID or NetLMM-MNa-IP. An example of the generated BC is shown in FIG. 14. The lower one is the added BC. Further, if necessary, Mobile IP proxy processor 48 of LMA 26 transmits BA (Binding Ack) to MIP-MNa 23 at S208.

As a result of these, BC is created in storage 51 of LMA 26, and packets with a destination options header attached starts to be transmitted from MIP-MNa 23 and addressed and transmitted to NetLMM-MNa-IP.

This destination options header-attached packet reaches LMA 26 as in S209. Since these packets are packets entering from communication means 46 on the WAN side, they are input to Mobile IP proxy processor 48 first. This Mobile IP proxy processor 48 determines whether a Mobile IP proxy process should be performed following the flowchart shown in FIG. 13. Since these packets are addressed to the terminal that is controlled by itself and have the MIP options header attached thereto, Mobile IP proxy processor 48 provides an MIP proxy function process (normal IP packetizing process) at S308.

Mobile IP proxy processor 48 of LMA 26 checks the consistency between the options header of the packet and the BC in storage 51, and if they are consistent, the packet having a format example shown in FIG. 15A is processed by setting the HoA in the destination options header to the source address, using the destination address as it is and deleting the options header, so as to form a normal IP packet as shown in FIG. 15B, which is forwarded to tunneling processor 49 and header compression and extension processor 50.

Header compression and extension processor 50 having received the packet as shown in FIG. 15B, based on the address indicated by the destination address "Dst", extracts ROHC context from storage 51. This ROHC context is created by transmission and reception of packets between NetLMM-MNa 21 and LMA 26 and shared thereby. That is, LMA 26 holds this context for every NetLMM-MN that is under control. Creation and sharing of this ROHC context is unrelated to the present invention so that description is omitted.

This ROHC context includes written rules for compressing and extending headers. FIG. 16 is also a diagram for showing a packet formatting example. As shown in FIG. 16A to FIG. 16B, header compression and extension processor 50 of LMA 26 compresses packet headers based on this ROHC context.

Here, header compression and extension processor 50 temporarily stores the address indicated in "Dst" and the sequence number in the UDP header or RTP header, and transfers them to tunneling processor 49.

Tunneling processor 49 searches the database in storage 51 for MAGa 24, based on the temporarily stored address, and adds MAGa-IP as the destination address of the outer header and adds the address of LMA 26 itself, LMA-IP, as the source address, and also adds the temporarily stored address, the sequence number in the UDP header or RTP header as the destination options header. This options header may be given as a single destination options header as in FIG. 16C, or two destination options headers may be added.

This packet is transmitted from communication means (NetLMM domain) 47 to MAGa 24 by way of NetLMM domain 25.

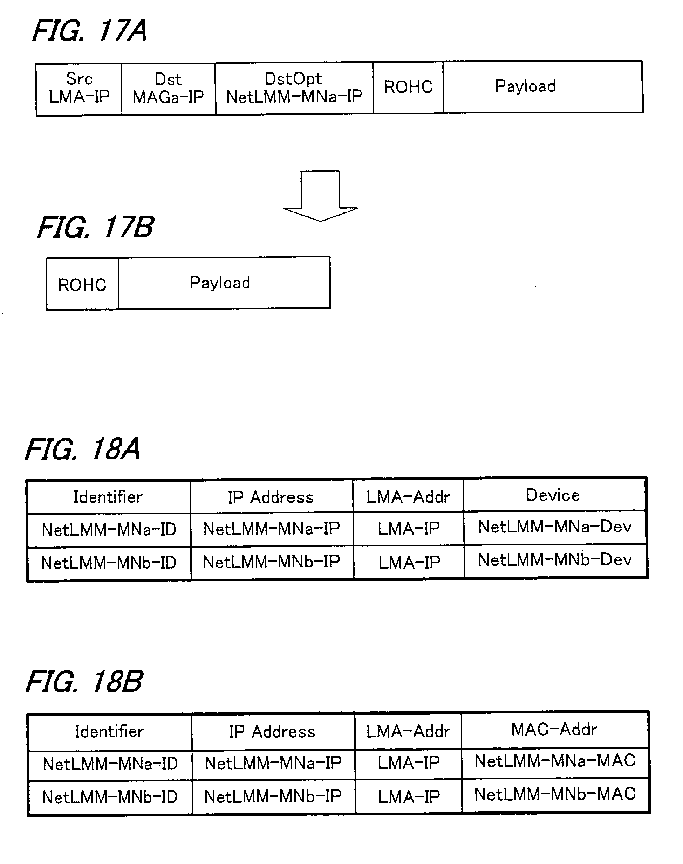

In MAGa 24, the packet is input from communication means (NetLMM domain) 41. This packet is transferred to tunneling processor 43. In tunneling processor 43, the outer header and the options header of the outer header are deleted as shown in FIG. 17A to FIG. 17B. At this time, tunneling processor 43 determines the NetLMM-MN to which the packet should be sent, based on the address of the options header of the outer header, and the order of the packet from the sequence number of the options header. In this case, the destination is NetLMM-MNa 21, so that the packet is forwarded in the correct order to NetLMM-MNa 21 by way of communication means (wireless) 42 for NetLMM-MNa 21.

Communication means (wireless) 42 for NetLMM-MNa 21 may be given as a device processor dedicated for NetLMM-MNa 21, or a single device processor may be provided for multiple terminals (NetLMM-MNs) and NetLMM-MNa 21 may be determined based on lower-layer information such as MAC address. For example, communication means (wireless) 42 may perform a forwarding process by reference to storage 45, which holds data as shown in FIG. 18A or stores information as shown in FIG. 18B by acquiring the information from another server.

Next, processing of packets from NetLMM-MNa 21 in the state described above will be explained.

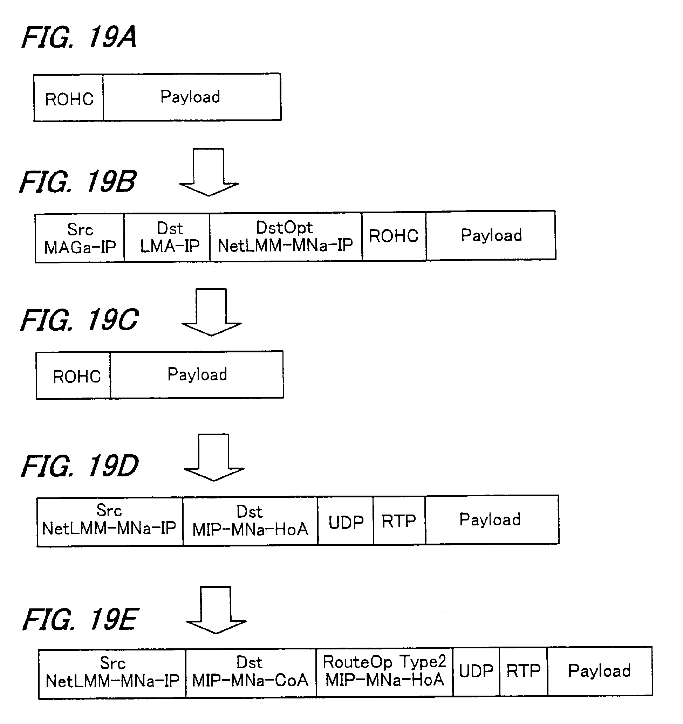

A packet shown in FIG. 19A is input from NetLMM-MNa 21 to MAGa 24 by way of communication means (wireless) 42 for NetLMM-MNa 21.

MAGa 24, referring to information in storage 45 as in FIG. 18A or FIG. 18B, determines NetLMM-MNa-IP and stores NetLMM-MNa-IP in the temporary storage, and forwards it to tunneling processor 43.

Tunneling processor 43 reads out NetLMM-MNa-IP from the temporary storage in storage 45 and performs a tunneling process. Tunneling processor 43 creates an encapsulated packet toward LMA 26 by reference to the information in storage 45 as in FIG. 18A or FIG. 18B. That is, the packet having a state shown in FIG. 19A is processed through encapsulation so as to produce an encapsulated packet as shown in FIG. 19B having MAGa-IP as the source address, LMA-IP as the destination address and NetLMM-MNa-IP as the options header of the outer header, and the packet is forwarded to NetLMM domain 25 through communication means (NetLMM domain) 41.

LMA 26 receives the packet through communication means (NetLMM domain) 47. The received packet is transferred to tunneling processor 49 and header compression and extension processor 50.

Tunneling processor 49 temporarily stores the options header of the outer header of the packet, NetLMM-MNa-IP, into the temporary storage of storage 51, then deletes the outer headers to form the packet as shown in FIG. 19C.

Next, header compression and extension processor 50 refers to the ROHC context for NetLMM-MNa 21 stored in storage 51 based on the temporarily stored NetLMM-MNa-IP and restores the original packet. As a result, the packet as shown in FIG. 19D is restored.

Thereafter, the packet is transferred to Mobile IP proxy processor 48. Mobile IP proxy processor 48 restores the Mobile IP packet based on the BC as in FIG. 14. That is, as shown in FIG. 19E, the packet with the source address unchanged, the destination address set with MIP-MNa-CoA and routing options header type2 set with MIP-MNa-HoA is restored, and this is forwarded to Internet/CoreNetwork 27 through communication means (WAN) 46.

The procedures before handover have been described heretofore as above.

Next, the procedures when NetLMM-MNa 21 has been handed over from MAGa 24 to MAGb 33 will be described.

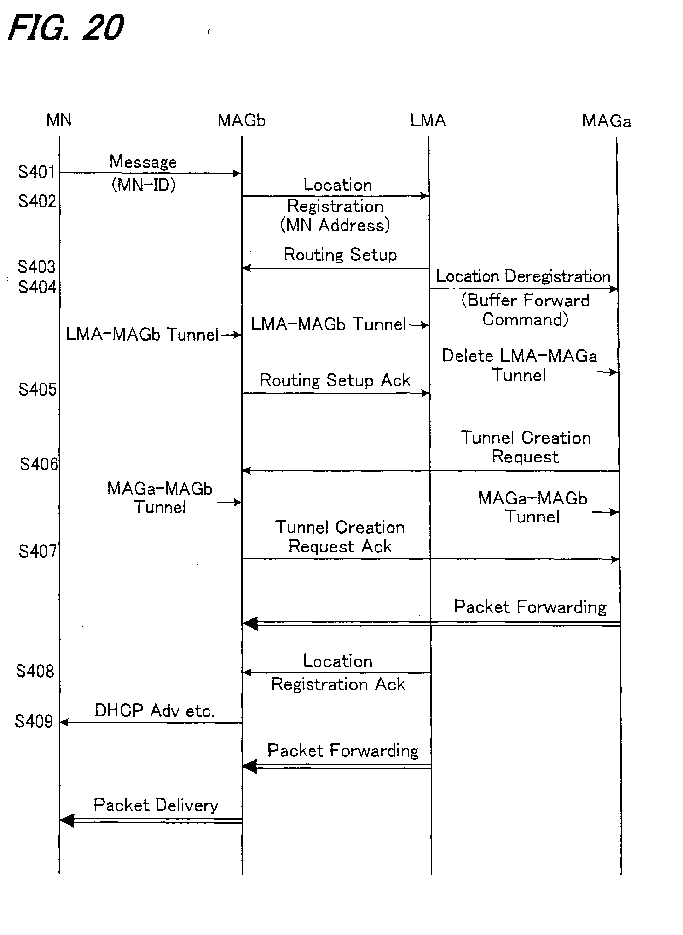

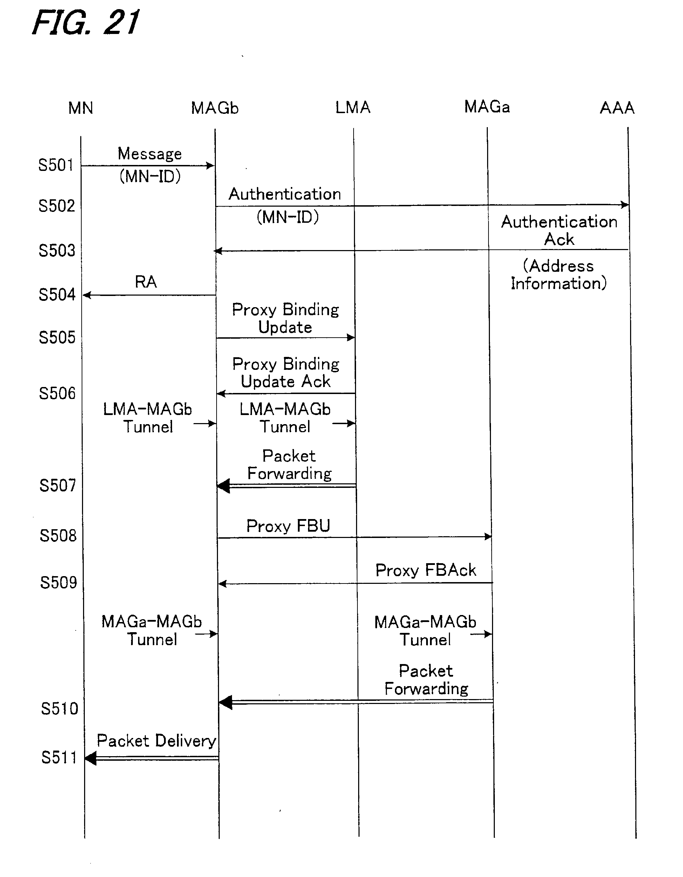

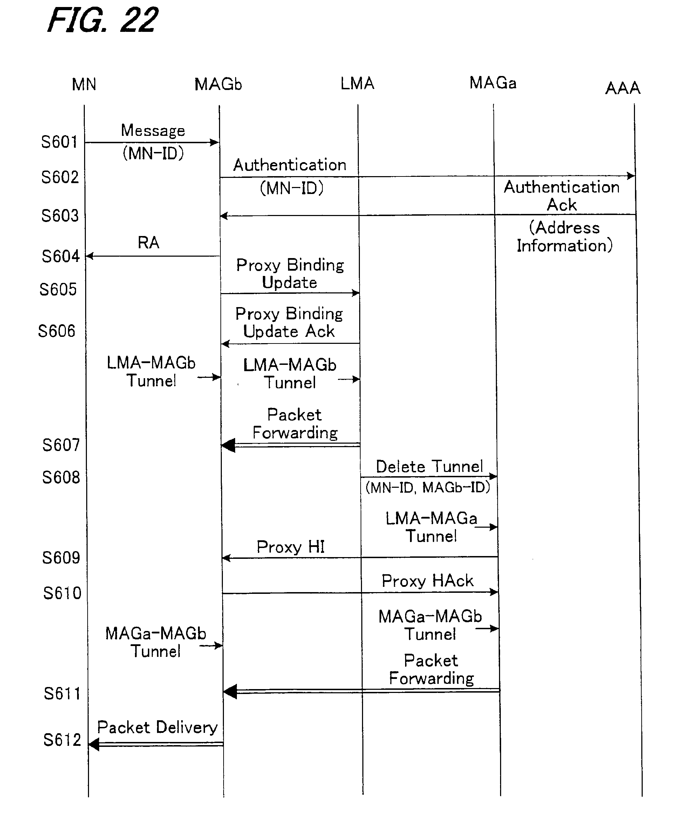

FIG. 20 is a sequence diagram when handover is done in the present embodiment in the case where the first network-based IP mobility protocol is used. FIGS. 21 and 22 are sequence diagrams when handover is done in the present embodiment in the case where the second network-based IP mobility protocol is used.

First, description will be made with regard to FIG. 20. When NetLMM-MNa 21 has been handed over, NetLMM-MNa 21 transmits a message including NetLMM-MNa-ID, the identifier of itself, to MAGb 33 at S401.

MAGb 33 receives the message through communication means (wireless) 42 and transfers it to network-based IP mobility protocol processor 44.

At S402, network-based IP mobility protocol processor 44 of MAGb 33 generates location registration including NetLMM-MNa-ID and MAGb-ID, the identifier of itself, or the IP address of itself and forwards the packet to NetLMM domain 25 via communication means (NetLMM domain) 41.

LMA 26 receives the location registration through communication means (NetLMM domain) 47 and transfers it to network-based IP mobility protocol processor 52.

Network-based IP mobility protocol processor 52 searches the database in storage 51 based on NetLMM-MNa-ID of the received location registration as a key and grasps that the NM has resided on the link of MAGa 24 up to now. However, because network-based IP mobility protocol processor 52 has received the location registration from MAGb 33, it recognizes an event of handover. As a result, network-based IP mobility protocol processor 52 of LMA26 transmits, a message for tunnel creation, or routing setup including the identifiers of LMA 26, MAGb 33 and NetLMM-MNa 21, LMA-ID, MAGb-ID and NetLMM-MNa 21, to MAGb 33, at S403.

When transmitting this routing setup, LMA 26 sets up tunneling processor 49 and header compression and extension processor 50. LMA-IP, MAGb-IP and NetLMM-MNa-IP, which are respectively derived from LMA-ID, MAGb-ID and NetLMM-MNa-ID by reference to storage 51, are used to perform tunneling, compression and extension setup for a bidirectional tunnel that performs both encapsulation and decapsulation processes. At this time, setup for options header handling is also performed. The processing related to actual packets at tunneling processor 49 and header compression and extension processor 50 is the same as that described above with regard to LMA 26.

It should be noted that this setup for tunneling processor 49 may be performed when routing setup Ack has been received at the following S405.

Further, as a process of network-based IP mobility protocol processor 52 of LMA 26 when this location registration has been received, a message for deleting the tunnel between LMA 26 and MAGa 24 is transmitted to MAGa 24, which is the previous access MAG. At the same time, buffer transfer to MAGb 33 is also instructed. That is, location deregistration which is the message for deleting this tunnel, is included with MAGb-ID or MAGb 33's IP address and NetLMM-MNa-ID, and transmitted to MAGa 24 via communication means (NetLMM domain) 47.

MAGb 33 receives the routing setup via communication means (NetLMM domain) 41 and transfers it to network-based IP mobility protocol processor 44.

As network-based IP mobility protocol processor 44 has received the routing setup, it executes tunnel setup for tunneling processor 43. This tunnel setup is carried out using LMA-IP, MAGb-IP and NetLMM-MNa-IP, which are respectively derived from LMA-ID, MAGb-ID and NetLMM-MNa-ID with reference to storage 45 so as to forma bidirectional tunnel that performs both encapsulation and decapsulation processes. At this time, setup for options header handling is also performed. The actual processing in tunneling processor 43 is the same as that described above with regard to MAGa 24.

When the tunnel setup is completed, network-based IP mobility protocol processor 44 of MAGb 33 transmits routing setup Ack to LMA 26 via communication means (NetLMM domain) 41, at S405.

MAGa 24 receives the location deregistration (transfer command) from LMA 26 via communication means (NetLMM domain) 41 and transfers it to network-based IP mobility protocol processor 44.

Network-based IP mobility protocol processor 44 of MAGa 24 sets up the tunnel for buffer forwarding in tunneling processor 43 and delegates the tunnel between LMA 26 and MAGa 24. This tunnel for buffer forwarding is generated from MAGa-IP and MAGb-IP to be a one-way encapsulating tunnel from MAGa-IP to MAGb-IP. At this time, setup for an options header is also performed.

This options header includes NetLMM-MNa-ID as the destination options header and is inserted as the sequence number with the sequence number portion of the destination options header of the packet sent from LMA 26.

Further, the bidirectional tunnel between LMA 26 and MAGa 24 is deleted.

Also, network-based IP mobility protocol processor 44 of MAGa 24 transmits a tunnel creation request for buffer forwarding to MAGb 33 via communication means (NetLMM domain) 41, at S406. This tunnel creation request includes MAGa-ID, MAGb-ID and NetLMM-MN-ID.

MAGb 33 receives the tunnel creation request via communication means (NetLMM domain) 41 and transfers it to network-based IP mobility protocol processor 44.

Network-based IP mobility protocol processor 44 of MAGb 33 creates a tunnel for buffer forwarding in tunneling processor 43. The tunnel for buffer forwarding is generated from MAGa-IP and MAGb-IP to be a one-way encapsulating tunnel from MAGa-IP to MAGb-IP. At this time, tunneling processor 43 also performs setup for an options header.

In response to the generation of a tunnel for reception, network-based IP mobility protocol processor 44 of MAGb 33 transmits tunnel creation request Ack to MAGa 24 via communication means (NetLMM domain) 41.

MAGa 24 receives the tunnel creation request Ack via communication means (NetLMM domain) 41 and transfers it to network-based IP mobility protocol processor 44.

In response to this, network-based IP mobility protocol processor 44 starts forwarding buffer of storage 45. In storage 45, the buffer is stored in association with NetLMM-MNa-ID or NetLMM-MNa-IP, so that it is possible to forward the buffer to MAGb 33 using the associated tunnel.

In the formant of this forwarding packet, the sequence number uses the sequence number contained in the destination options header of the encapsulated packet having arrived at MAGa 24. As a result, the sequence numbers given at LMA 26 is also used for the packets transferred from MAGa 24 to MAGb 33, so that the possibility of occurrence of inset of packets when the packets are delivered to NetLMM-MNa 21 is eliminated.

LMA 26 receives the routing setupAckvia communication means (NetLMM domain) 47 and transfers it to network-based IP mobility protocol processor 52.

Network-based IP mobility protocol processor 52 transmits location registration Ack including information such as NetLMM-MNa-Pre/64 as the information for address configuration, to MAGb 33 via communication means (NetLMM domain) 47 at S408. After this, LMA 26 starts forwarding packets to MAGb 33.

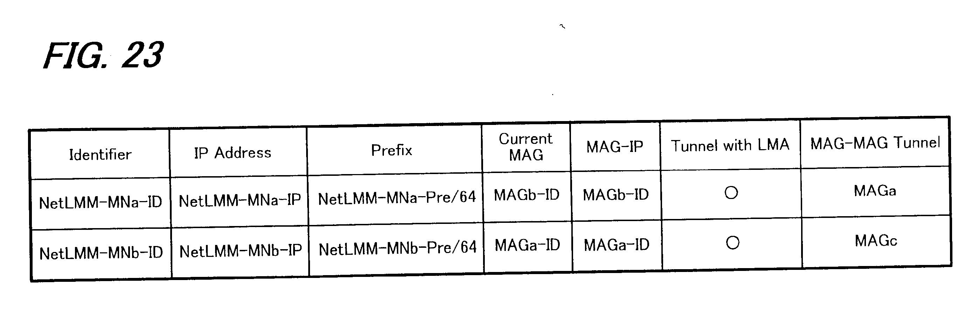

As soon as these procedures are completed, network-based IP mobility protocol processor 52 of LMA 26 updates the network-based IP mobility protocol data that has been given as shown in FIG. 9A, into that shown in FIG. 23.

MAGa 24 receives the tunnel creation request Ack via communication means (NetLMM domain) 41 and transfers it to network-based IP mobility protocol processor 44.

When receiving the location registration Ack, network-based IP mobility protocol processor 44 of MAGb 33 transmits a message of address configuration to NetLMM-MNa 21 at S409. In the present embodiment, this message is regarded as stateful address configuration based on DHCPv6 to end address configuration.

Next, description will made with FIGS. 21 and 22. Since the basic procedures are the same as in FIG. 20 except for the authentication procedures between MAGb 33 which NetLMM-MNa 21 accesses and AAA server 35 as described in the prior art, description herein will be focused only on the MAGa 24-MAGb 33 tunnel setup for fast handover. Packet forwarding other than this and the procedures of adding options headers to the packets are the same as those described with FIG. 20, so that description is omitted herein.

LMA 26, when transmitting Proxy Binding Update Ack at S506 in FIG. 21, also transmits the IP address or ID of MAGa 24 to MAGb 33.

In LMA 26 and MAGb 33, a bidirectional tunnel is set up. Since LMA 26 can confirm that the tunnel setup has been completed also in MAGb 33, from Proxy Binding Update Ack, the LAM starts forwarding the packets that are addressed to NetLMM-MNa 21 and have arrived at LMA 26 to MAGb 33 at and after S507.

Next, MAGb 33 transmits Proxy Fast Binding Update to MAGa 24 at S508. This Proxy Fast Binding Update is a message including NetLMM-MNa-IP and MAGb-IP, by which MAGb 33 requests MAGa 24 to forward the packets addressed to NetLMM-MNa 21 that remain in the buffer of MAGa 24, to MAGb 33.

At S509, MAGa 24 transmits Proxy Fast Binding Update Ack to MAGb 33 to complete the MAGa 24-MAGb 33 tunnel so that the packets held in MAGa 24 start being forwarded to MAGb 33 at and after S510.

In this connection, when the LMA 26-MAGb 33 tunnel has been prepared or when this MAGa 24-MAGb 33 tunnel has been prepared, the tunnel between NetLMM-MNa 21 and LMA 26 is discarded. Accordingly, no packet transfer will occur from LMA 26 to MAGa 24, so that the MAGa 24-MAGb 33 tunnel is discarded when forwarding of the packets addressed to NetLMM-MNa 21, currently held by MAGa 24 to MAGb 33 is completed.

Next, the example shown in FIG. 22 will be described.
In FIG. 22, the steps up to S607 are the same as in FIG. 21.
When the tunnel delete request from LMA 26 to MAGa 24 is transmitted at S608, the ID or IP address of NetLMM-MNa 21 and the ID or IP address of MAGb 33 are also transmitted.

MAGa 24 having received this tunnel delete request, deletes the tunnel for NetLMM-MNa 21 and transmits Proxy HI (Handover Initiate) including NetLMM-MNa-IP and MAGa-IP, for requesting creation of a tunnel between MAGa 24 and MAGb 33 to enable the packets addressed to NetLMM-MNa 21 and remaining in the buffer of MAGa 24 to be forwarded to MAGb 33, to the MAGb, at S609.

When receiving the Proxy HI, MAGb 33 creates an MAGa 24-MAGb 33 and transmits Proxy HAck (Handover Acknowledgement) to MAGa 24 at S610.
When receiving the Proxy HAck, MAGa 24 creates an MAGa 24-MAGb 33 tunnel and forwards packets at S611.

In the above way, the tunnel setup after handover is completed by the steps shown in FIGS. 20 to 22. Next, the actual packet processing in the present embodiment will be described.

In LMA 26, BC has been already prepared so that packets with the destination options header are transmitted from MIP-MNa 23 to the address of NetLMM-MNA-IP. This destination options header-attached packet initially reaches LMA 26.

Since these packets are those entering from communication means 46 on the WAN side, they are input to Mobile IP proxy processor 48 first. This Mobile IP proxy processor 48 determines whether a Mobile IP proxy process should be performed following the flowchart shown in FIG. 13. Since these packets are addressed to the terminal that is controlled by itself and have the MIP options header attached thereto, the processor provides the MIP proxy function process (normal IP packetizing process) at S308.

Mobile IP proxy processor 48 of LMA 26 checks the consistency between the options header of the packet and the BC in storage 51, and if they are consistent, the HoA in the destination options header is set as the source address while the destination address is unchanged and the options header is deleted so as to transform the packet from FIG. 15A to FIG. 15B, forming a normal IP packet, which is forwarded to tunneling processor 49 and header compression and extension processor 50.

Header compression and extension processor 50 having received the packet as shown in FIG. 15B, based on the address indicated by "Dst", extracts ROHC context from storage 51.

This ROHC context is created by transmission and reception of packets between NetLMM-MNa 21 and LMA 26 and shared thereby. That is, LMA 26 holds this context for every NetLMM-MN that is under control. Creation and sharing of this ROHC context is unrelated to the present invention so that description is omitted. This ROHC context includes written rules for compressing and extending headers. Header compression and extension processor 50 of LMA 26 compresses headers based on this ROHC context so as to transform the packet from FIG. 16A to FIG. 16B.

Here, header compression and extension processor 50 temporarily stores the address indicated in "Dst" and the sequence number in the UDP header or RTP header, and transfers them to tunneling processor 49.

Tunneling processor 49 searches the database in storage 51 for MAGb 33 as shown in FIG. 23, based on the temporarily stored address, and adds MAGb-IP as the destination address of the outer header and adds the address of LMA 26 itself, LMA-IP, as the source address, and also adds the temporarily stored address, the sequence number in the UDP header or RTP header as the destination options header. This packet is transmitted from communication means (NetLMM domain) 47 to MAGb 33 by way of NetLMM domain 25.

In MAGb 33, the packet is input from communication means (NetLMM domain) 41. Then, this packet is transferred to tunneling processor 43. In tunneling processor 43, the outer header and the options header of the outer header are deleted so that the packet is transformed from FIG. 17A to FIG. 17B. At this time, the NetLMM-MN to which the packet should be sent is determined based on the options header of the outer header, and also the order of packet delivery is determined from the sequence number. In this case, since the destination terminal is NetLMM-MNa 21, the packet is forwarded to NetLMM-MNa 21 by way of communication means (wireless) 42 for NetLMM-MNa 21.

Communication means (wireless) 42 for NetLMM-MNa 21 may be given as a device processor dedicated for NetLMM-MNa 21, or a single device processor may be provided for multiple terminals (NetLMM-MNs) and NetLMM-MNa 21 may be determined based on lower-layer information such as MAC address. For example, communication means (wireless) 42 may deliver the packet to the NetLMM-MN by reference to storage 45, which holds data as shown in FIG. 18A or stores information as shown in FIG. 18B by acquiring the information from another server.

Next, processing of packets from NetLMM-MNa 21 in the present embodiment will be explained.

A header-compressed packet as shown in FIG. 19A is input from NetLMM-MNa 21 to MAGb 33 by way of communication means (wireless) 42 for NetLMM-MNa 21.

Communication means (wireless) 42 of MAGb 33 determines NetLMM-MNa-IP by reference to information in storage 45 as shown in FIG. 18A or FIG. 18B, stores NetLMM-MNa-IP in the temporary storage and transfers the packet to tunneling processor 43.

Tunneling processor 43 reads out NetLMM-MNa-IP from the temporary storage in storage 45 and performs a tunneling process. In the tunneling process, an encapsulated packet toward LMA 26 is created by reference to the information in storage 45 as in FIG. 18A or FIG. 18B. That is, tunneling processor 43 subjects the packet as shown in FIG. 19A to an encapsulating process so as to produce an encapsulated packet having MAGb-IP as the source address, LMA-IP as the destination address and NetLMM-MNa-IP as the options header of the outer header, and forwards the packet to NetLMM domain 25 through communication means (NetLMM domain) 41.

LMA 26 receives the packet through communication means (NetLMM domain) 47. The received packet is transferred to tunneling processor 49 and header compression and extension processor 50.

Tunneling processor 49 temporarily stores the options header of the outer header of the packet, NetLMM-MNa-IP, into storage 51, then deletes the outer headers to form a packet having a format as shown in FIG. 19C.

Header compression and extension processor 50 searches for the ROHC contest for NetLMM-MNa 21 stored in the database portion of storage 51, based on the temporarily stored NetLMM-MNa-IP temporarily stored in storage 51, and restores the original packet based on the ROHC context. As a result, the packet as shown in FIG. 19D is restored.

Thereafter, the packet is transferred to Mobile IP proxy processor 48. Mobile IP proxy processor 48 restores the Mobile IP packet based on the BC as shown in FIG. 14. That is, as shown in FIG. 19E, the packet with the source address unchanged, the destination address set with MIP-MNa-CoA and routing options header type2 set with MIP-MNa-HoA is restored, and this is forwarded to Internet/WAN/CoreNetwork 27 through communication means (WAN) 46.

Heretofore, the compression and extension setup of tunnel headers at the time of handover and the Mobile IP proxy process and the compression and extension process of tunnel headers have been explained.

Though, in the second embodiment, NetLMM-MNa-ID and NetLMM-MNa-IP are used distinctively, NetLMM-MNa-IP can all be replaced by NetLMM-MNa-ID. This is because NetLMM-MNa-IP is searchable from NetLMM-MNa-ID. Further, when the IP address is used as an identifier, these become equivalent. By the way, there is a possibility that a plurality of NetLMM-MNa-IPs are discovered from NetLMM-MNa-ID. Conversely, it is possible to find a unique NetLMM-MNa-ID from NetLMM-MNa-IP. Accordingly, use of NetLMM-MNa-IP in place of NetLMM-MNa-ID is realistic from a practical viewpoint.

Additionally, as a result of using the destination options header, the MAG becomes able to forward packets in the IP layer and can forward packets having their header compressed, to the MN in the correct order, without having an application GW (gateway) function. This is a markedly great advantage.

The communication system, control apparatus and router using a network-based IP mobility protocol of the present invention as well as its communication method should not be limited to the above-illustrated examples alone, but various modifications can be added without departing from the gist of the present invention.

## Claims

1. A communication system using a network-based IP mobility protocol, in which a mobile terminal, based on the network-based IP mobility protocol, performs communication by transmission and reception of data through a router that belongs to a same link, based on an address uniquely assigned to the mobile terminal, and when the mobile terminal has moved to another network, communication is changed over by the control of a control apparatus, **characterized in that**
the control apparatus performs a compression process of a header of data received from a foreign network, and adds an options header to the header of the data, the options header being capable of identifying the mobile terminal as a destination, and transmits the data to the router on the same link to which the mobile terminal belongs, and,
the router identifies the mobile terminal based on the options header and forwards the data to the mobile terminal.

2. The communication system using a network-based IP mobility protocol according to Claim 1, wherein the mobile terminal performs a process of compressing the header based on compression information shared with the control apparatus to transmit the data to the router on the same link;
the router, based on bearer information when the data is transmitted from the mobile terminal, identifies the mobile terminal, adds an options header to the data header, the options header being capable of identifying of the mobile terminal, and transmits the data to the control apparatus; and,
the control apparatus identifies the mobile terminal based on the options header, extends the header by reference to the compression information on the mobile terminal and performs routing.

3. The communication system using a network-based IP mobility protocol according to Claim 2, wherein when the mobile terminal has moved to another network, the router on the network which the mobile terminal has newly accessed, receives a notice including the identifier of the mobile terminal from the mobile terminal and transmits a notice including the identifier of the mobile terminal and the identifier or IP address of the router, to the control apparatus;
the control apparatus transmits to the router to which the mobile terminal has previously accessed, a buffer forward command notice for requesting transfer of the data addressed to the mobile terminal from the previously accessed router to the newly accessed router; and,
the previously accessed router adds an options header to the buffer data addressed to the mobile terminal, the options header being capable of identifying the mobile terminal, and transmits the data to the newly accessed router.

4. The communication system using a network-based IP mobility protocol according to Claim 2, wherein when the mobile terminal has moved to another network, the router on the network which the mobile terminal newly has accessed, receives a notice including the identifier of the mobile terminal from the mobile terminal and transmits a notice including the identifier of the mobile terminal and the identifier or IP address of the router, to the control apparatus;
the control apparatus transmits to the router the mobile terminal has newly accessed, the identifier or IP address of the previously accessed router;
the newly accessed router transmits a notice including the identifier of the mobile terminal and the identifier or IP address of the router to the previously accessed router; and,
the previously accessed router adds an options header to the buffer data addressed to the mobile terminal, the options header being capable of identifying the mobile terminal, and transmits the data to the newly accessed router.

5. The communication system using a network-based IP mobility protocol according to any one of Claims 1 to 4, wherein the control apparatus executes a proxy function for the mobile terminal when the mobile terminal performs transmission and reception of data based on a Mobile IP protocol.

6. A control apparatus, which is used for a system in which a mobile terminal, based on the network-based IP mobility protocol, performs communication by transmission and reception of data through a router that belongs to a same link, based on an address uniquely assigned to the mobile terminal, and which performs control of changing over communication when the mobile terminal has moved to another network, comprising:
a communication means for performing transmission and reception of data with a foreign network or the router;
a storing means for storing header compression information;
a compression processing means for compressing or extending the header of the data based on the header compression information; and,
a tunnel processing means for adding an options header to the data, the options header being capable of identifying the mobile terminal, and discriminating the mobile terminal from the options header added to the data.

7. The control apparatus according to Claim 6, further comprising a control means which, when the mobile terminal has moved to another network, creates a buffer forward command notice including the identifier of the mobile terminal and the identifier or IP address of the newly accessed router for commanding transfer of the data addressed to the mobile terminal from the previously accessed router to the newly accessed router, wherein the communication means transmits the buffer forward command notice to the previously accessed router.

8. The control apparatus according to Claim 6, further comprising a control means which, when the mobile terminal has moved to another network, creates a notice including the identifier of the mobile terminal and the identifier or IP address of the previously accessed router, wherein the communication means transmits the notice to the newly accessed router.

9. The control apparatus according to Claims 6 through 8, wherein the control means executes a proxy function for the mobile terminal when the mobile terminal performs transmission and reception of data based on a Mobile IP protocol.

10. The control apparatus according to Claim 9, wherein the storing means stores a binding cache as the communication information on the mobile terminal for relaying based on the Mobile IP protocol, and wherein
a Mobile IP processing means for relaying between the mobile terminal and the terminal using the Mobile IP protocol is provided when the received data is used for communication between the mobile terminal controlled by the communication means and a terminal making use of the Mobile IP protocol.

11. The control apparatus according to Claim 10, wherein when the data is received from the foreign network, the communication means outputs the data to the Mobile IP processing means, the Mobile IP processing means determines whether the data is based on Mobile IP protocol and outputs the data to the compression processing means, the compression processing means performs a compression process of the data to output the data to the tunnel processing means, and the tunnel processing means adds an options header to the data to transmit the data to the router.

12. The control apparatus according to Claim 10, wherein when the data is received from the router, the communication means outputs the data to the tunnel processing means, the tunnel processing means deletes the options header and identifies the mobile terminal from the options header to output the data to the compression processing means, the compression processing means performs an extension process of the header of the data to output the data to the Mobile IP processing means, and the Mobile IP processing means performs routing of the data by reference to the binding cache.

13. A router for performing transmission and reception of data with a mobile terminal that belongs to a same link and performs communication using a network-based IP mobility protocol based on an address uniquely assigned to the mobile terminal under the control of a control apparatus, comprising:
a first communication means which performs transmission and reception of data with the mobile terminal;
a second communication means which performs transmission and reception of data with the control apparatus; and
a tunnel processing means for adding an options header to the data from the mobile terminal, the options header being capable of identifying the mobile terminal, and deleting the attached options header from the data from the control apparatus and identifying the mobile terminal, wherein
the first communication means identifies the mobile terminal based on bearer information when data is received from the mobile terminal.

14. The router according to Claim 13, wherein when the mobile terminal has moved to another network and when the second communication means receives from the control apparatus a buffer forward command notice including the identifier of the mobile terminal and the identifier or IP address of the newly accessed router for commanding transfer of data addressed to the mobile terminal to the newly accessed router, thetunnelprocessingmeans is caused to setupbuffertransfer, add the options header to the buffer data and forward the data to the newly accessed router.

15. The router according to Claim 13, wherein when the mobile terminal has moved from another network and when the second communication means receives from the control apparatus a notice including the identifier of the mobile terminal and the identifier or IP address of the previously accessed router, the notice including the identifier of the mobile terminal and the identifier of the newly accessed router is transmitted to the previously accessed router.

16. A communication method, which, using a network-based IP mobility protocol, causes a mobile terminal to perform transmission and reception of data through a router that belongs to a same link, based on an address uniquely assigned to the mobile terminal, and causes a control apparatus to perform control of changing over communication of the mobile terminal when the mobile terminal has moved to another network,
**characterized in that** the mobile terminal is caused to execute a step of compressing a header of data, and a step of transmitting the data to the router;
the router is caused to execute a step of identifying the mobile terminal from bearer information of the received data from the mobile terminal, and a step of adding an options header to the data, the options header being capable of identifying the mobile terminal, and a step of transmitting the data to the control apparatus; and
the control apparatus is caused to execute a step of deleting the options header of the data received from the router and identifying the mobile terminal from the options header, and a step of extending the header of the data by reference to the compression information on the mobile terminal, thereby performing compression or extension and routing of data between the control apparatus and the mobile terminal.

17. The communication method according to Claim 16, wherein the control apparatus is caused to execute a step of compressing the header of the data received from a foreign network by reference to the compression information, a step of adding an options header to the data, the options header being capable of identifying the mobile terminal to which the data is addressed, and a step of transmitting the data to the router; and
the router is caused to execute a step of deleting the options header of the data received from the control apparatus and identifying the mobile terminal from the options header, and a step of transmitting the data to the mobile terminal.

18. The communication method according to Claim 17, wherein when the mobile terminal has moved to another network, the control apparatus is caused to execute a step of transmitting a buffer forward command notice that instructs the previously accessed router to transfer the buffer data addressed to the mobile terminal to the newly accessed router; and,
the previously accessed router is caused to execute a step of transferring the buffer data attached with the options header to the newly accessed router.

19. The communication method according to Claim 17, wherein when the mobile terminal has moved to another network, the control apparatus is caused to execute a step of transmitting a notice including the identifier of the mobile terminal and the identifier or IP address of the previously accessed router, to the newly accessed router;
the newly accessed router is caused to execute a step of transmitting a notice including the identifier of the mobile terminal and the identifier or IP address of the router, to the previously accessed router; and,
the previously accessed router is caused to execute a step of transferring the buffer data attached with the options header to the newly accessed router.

20. The communication method according to any one of Claims 16 to 19, wherein when a terminal that communicates with the mobile terminal performs transmission and reception of data based on a Mobile IP protocol, the control apparatus executes a proxy function for the mobile terminal.
